(19) **Europäisches Patentamt / European Patent Office / Office européen des brevets**

(11) **EP 4 425 972 A1**

(12) # EUROPEAN PATENT APPLICATION
published in accordance with Art. 153(4) EPC

(43) Date of publication:
**04.09.2024   Bulletin 2024/36**

(21) Application number: **22887649.6**

(22) Date of filing: **27.10.2022**

(51) International Patent Classification (IPC):
**H04W 4/12** (2009.01)          **H04W 4/40** (2018.01)
**H04W 4/02** (2018.01)          **H04L 51/212** (2022.01)

(52) Cooperative Patent Classification (CPC):
**H04L 51/212; H04W 4/02; H04W 4/12; H04W 4/40**

(86) International application number:
**PCT/KR2022/016587**

(87) International publication number:
**WO 2023/075454 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **27.10.2021   KR 20210144839**

(71) Applicant: **LG Electronics Inc.
Yeongdeungpo-gu
Seoul 07336 (KR)**

(72) Inventors:
• **HWANG, Jaeho**
  **Seoul 06772 (KR)**
• **JEONG, Seongwoo**
  **Seoul 06772 (KR)**
• **KIM, Hakseong**
  **Seoul 06772 (KR)**
• **SEO, Hanbyul**
  **Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **METHOD AND DEVICE FOR TRANSMITTING/RECEIVING WIRELESS SIGNAL IN WIRELESS COMMUNICATION SYSTEM**

(57)   The presented method by which a first device operates in a wireless communication system may comprise the steps of: transmitting configuration information for direct device-to-device communication to a second device; receiving, from the second device, a message including a header and a payload, the header including an extended flag field, which includes a plurality of bits, and an extended data field, which corresponds to each data type identified in the extended flag field; and transmitting the message to a third device on the basis of satisfying the preconfigured condition by filtering information acquired on the basis of the extended data field.

**FIG. 27**

EP 4 425 972 A1

## Description

### TECHNICAL FIELD

The present disclosure relates to a wireless communication system, and more particularly to a method and apparatus for transmitting and receiving a wireless signal.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface (interface between User Equipment and Radio Network System).

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

### DISCLOSURE

### TECHNICAL PROBLEM

The present disclosure aims to provide a method and device for efficiently filtering messages.

The present disclosure provides a method of efficiently performing a procedure of transmitting and receiving a wireless signal and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

In a proposed embodiment, provided herein is an operation method for a first device in a wireless communication system. The method may include: transmitting configuration information for direct device-to-device communication to a second device; receiving a message including a header and a payload from the second device, wherein the header includes an extension flag field including a plurality of bits and extension data fields respectively corresponding to data types identified by the extension flag field; and forwarding the message to a third device based on filtering information obtained from the extension data field being satisfied a predetermined condition.

In a proposed embodiment, provided herein is a first device configured to operate in a wireless communication system. The first device may include: at least one radio frequency (RF) unit; at least one processor; and at least one computer memory operably connected to the at least one processor and configured to, when executed, cause the at least one processor to perform operations. The operations may include: transmitting configuration information for direct device-to-device communication to a second device; receiving a message including a header and a payload from the second device, wherein the header includes an extension flag field including a plurality of bits and extension data fields respectively corresponding to data types identified by the extension flag field; and forwarding the message to a third device based on filtering information obtained from the extension data field being satisfied a predetermined condition.

In a proposed embodiment, provided herein is an operation method for a second device in a wireless communication system. The method may include: receiving configuration information for direct device-to-device communication from the second device; and transmitting a message including a header and a payload to a first device. The header may include an extension flag field including a plurality of bits and extension data fields respectively corresponding to data types identified by the extension flag field. Whether the message is forwarded to a third device through the first device may be determined depending on whether filtering information obtained from the extension data field satisfies a predetermined condition.

In a proposed embodiment, provided herein is a second device configured to operate in a wireless communication system. The second device may include: at least one RF unit; at least one processor; and at least one computer memory operably connected to the at least one processor and configured to, when executed, cause the at least one processor to perform operations. The operations may include: receiving configuration information for direct device-to-device communication from the second device; and transmitting a message including a header and a payload to a first device. The header may include an extension flag field including a plurality of bits and extension data fields respectively corresponding to data types identified by the extension flag field. Whether the message is forwarded to a third device through the first device may be determined depending on whether filtering information obtained from the extension data field satisfies a predetermined condition.

In a proposed embodiment, provided herein is an apparatus configured to operate in a wireless communication system. The apparatus may include: at least one processor; and at least one computer memory operably connected to the at least one processor and configured to, when executed, cause the at least one processor to perform operations. The operations may include: transmitting configuration information for direct device-to-device communication to a second device; receiving a message including a header and a payload from the second device, wherein the header includes an extension flag field including a plurality of bits and extension data fields respectively corresponding to data types identified by the extension flag field; and forwarding the message to a third device based on filtering information obtained from the extension data field being satisfied a predetermined condition.

In a proposed embodiment, provided herein is a computer-readable storage medium comprising at least one computer program configured to, when executed, cause at least one processor to perform operations. The operations may include:

transmitting configuration information for direct device-to-device communication to a second device; receiving a message including a header and a payload from the second device, wherein the header includes an extension flag field including a plurality of bits and extension data fields respectively corresponding to data types identified by the extension flag field; and forwarding the message to a third device based on filtering information obtained from the extension data field being satisfied a predetermined condition.

According to an embodiment, each of the plurality of bits may represent a different data type, and a number of the extension data fields included in the header may be equal to a number of the data types identified based on values of the plurality of bits.

According to an embodiment, the data types identified by the extension flag field may include at least one of a driving direction, a z-axis level, or a lane identifier (ID).

According to an embodiment, an extension data field corresponding to the driving direction may include directional information including north, south, east, and west and information on a distance to a center lane.

According to an embodiment, the directional information may be determined based on an angle measured based on the driving direction of the second device, and information on the angle may be transmitted from the first device.

According to an embodiment, based on determining, from the extension data field, that the third device is driving in a same direction as the second device, the message may be forwarded to the third device.

According to an embodiment, based on determining, from the extension data field, that the third device is driving in an opposite direction to the second device, the message may not be forwarded to the third device.

According to an embodiment, an extension data field corresponding to the z-axis level may include information on an altitude of the second device on a z-axis, and the information on the altitude of the second device may include one of a plurality of z-axis levels predetermined based on a road on which the second device is driving.

According to an embodiment, based on determining, from the extension data field, that the third device and the second device do not overlap on the z-axis, the message may not be forwarded to the third device.

According to an embodiment, an extension data field corresponding to the lane ID may include information on an ID of a lane in which the second device is driving.

According to an embodiment, based on determining, from the extension data field, that the third device is driving in a same direction as the second device, the message may be forwarded to the third device.

According to an embodiment, the filtering information may include a filtering index, and based on a value of the filtering index being satisfied the predetermined condition, the message may be transmitted to the third device.

According to an embodiment, the first device may include a server configured to control the device-to-device communication, and the second device and the third device may include a user equipment (UE) configured to perform the device-to-device communication.

According to an embodiment, the header may further include an additional extension flag field, and the flag field may further include a bit representing a presence of the additional extension flag field.

According to an embodiment, the filtering information may be obtained based on the header without decoding the payload.

## ADVANTAGEOUS EFFECTS

According to proposed embodiments, messages may be efficiently filtered, thereby prevent network overload.

According to the proposed embodiments, information required for message filtering may be easily obtained from the header included in a message without decoding the payload of the message.

Effects to be achieved by embodiment(s) are not limited to what has been particularly described hereinabove and other effects not mentioned herein will be more clearly understood by persons skilled in the art to which embodiment(s) pertain from the following detailed description.

## BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure.

FIG. 1 is a diagram for explaining by comparing V2X communication based on RAT before NR and V2X communication based on NR.

FIG. 2 illustrates the structure of an LTE system to which embodiment(s) are applicable

FIG. 3 illustrates the structure of an NR system to which embodiment(s) are applicable.

FIG. 4 illustrates the structure of an NR radio frame to which embodiment(s) are applicable.

FIG. 5 illustrates the slot structure of an NR frame to which embodiment(s) are applicable.

FIG. 6 illustrates a radio protocol architecture for SL communication.

FIG. 7 illustrates UEs performing V2X or SL communication.

FIG. 8 illustrates resource units for V2X or SL communication.

FIG. 9 is a diagram for explaining an ITS station reference architecture.

FIG. 10 illustrates an example of structure of an ITS station that may be designed and applied based on a reference architecture.

FIG. 11 is a diagram for explaining an operation of filtering messages based on the lane status of vehicles according to a proposed embodiment.

FIG. 12 is a diagram illustrating the configurations of a user equipment (UE) and a server according to proposed methods.

FIG. 13 illustrates the structure of a message according to a proposed embodiment.

FIG. 14 illustrates an example in which information on the direction of a vehicle is included in an extension field according to a proposed embodiment.

FIG. 15 is a diagram illustrating a method by which a UE extracts direction information according to a proposed embodiment.

FIG. 16 is a diagram illustrating a vehicle-to-network (V2N) message including information on the direction of a first vehicle according to an embodiment.

FIG. 17 illustrates an example in which information on a z-axis level of a UE in an extension field according to an embodiment.

FIG. 18 a diagram illustrating a method by which a UE extracts Z-axis level information according to a proposed embodiment.

FIG. 19 is a diagram illustrating a V2N message including information on a z-axis level of a UE according to an embodiment.

FIG. 20 is a diagram illustrating an example of using the value of DE_LaneID as lane ID information according to an embodiment.

FIG. 21 illustrates a method of configuring messages based on information on the ID of a lane according to a proposed embodiment.

FIG. 22 is a diagram illustrating operations between a UE and a server according to a proposed embodiment.

FIG. 23 is a diagram for explaining additional road information transmitted from a server to a UE according to an embodiment.

FIG. 24 is a diagram illustrating additional road information transmitted through a server according to one embodiment.

FIG. 25 is a diagram illustrating an example of a probability distribution function of the Z-axis levels of vehicles.

FIG. 26 is a diagram illustrating an example in which message filtering is performed based on the presence or absence of a central divider according to an embodiment.

FIG. 27 is a flowchart illustrating operations of a first device according to an embodiment.

FIG. 28 is a diagram for explaining operations of a second device according to a proposed embodiment.

FIG. 29 illustrates a communication system applied to the present disclosure.

FIG. 30 illustrates wireless devices applicable to the present disclosure.

FIG. 31 illustrates another example of a wireless device to which the present disclosure is applied.

FIG. 32 illustrates a vehicle or an autonomous driving vehicle applied to the present disclosure.

**DETAILED DESCRIPTION**

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP (3rd generation partnership project) LTE(long term evolution) is a part of Evolved UMTS (E-UMTS) using E-UTRA. 3GPP LTE adopts OFDMA on downlink (DL) and adopts SC-FDMA on uplink (UL). LTE-advanced (LTE-A) is an evolved version of 3GPP LTE.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

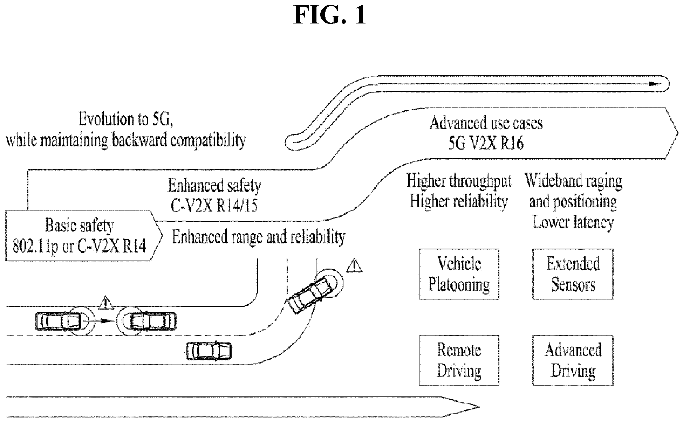

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic status information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

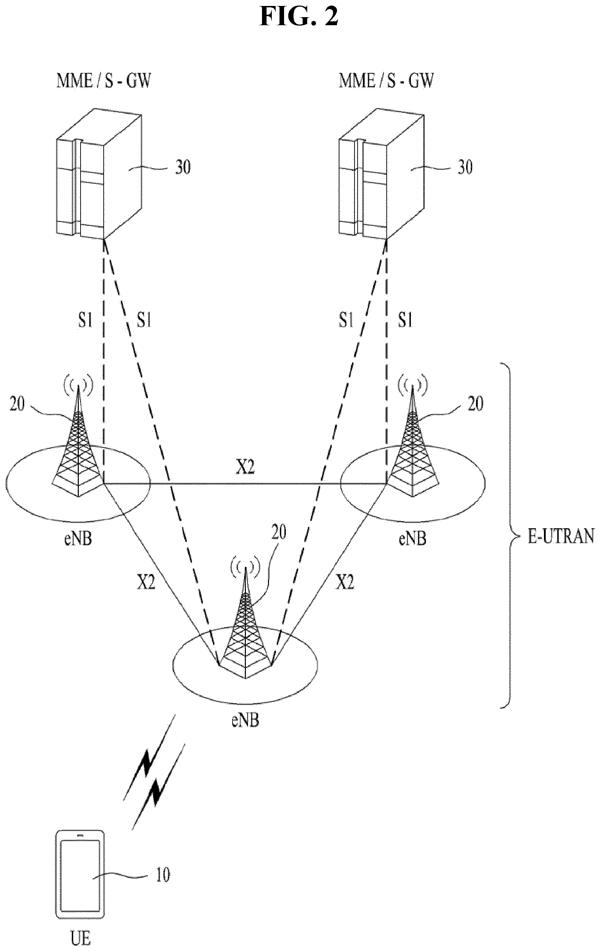

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes a base station (BS) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An BS 20 is a fixed station communication with the UE 10 and may also be referred to as an evolved-NodeB (eNB), a base transceiver system (BTS), or an access point.

BS 20 may be connected to each other via an X2 interface. A BS 20 is connected to an evolved packet core (EPC) 39 via an S1 interface. More specifically, the BS 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and a BS.

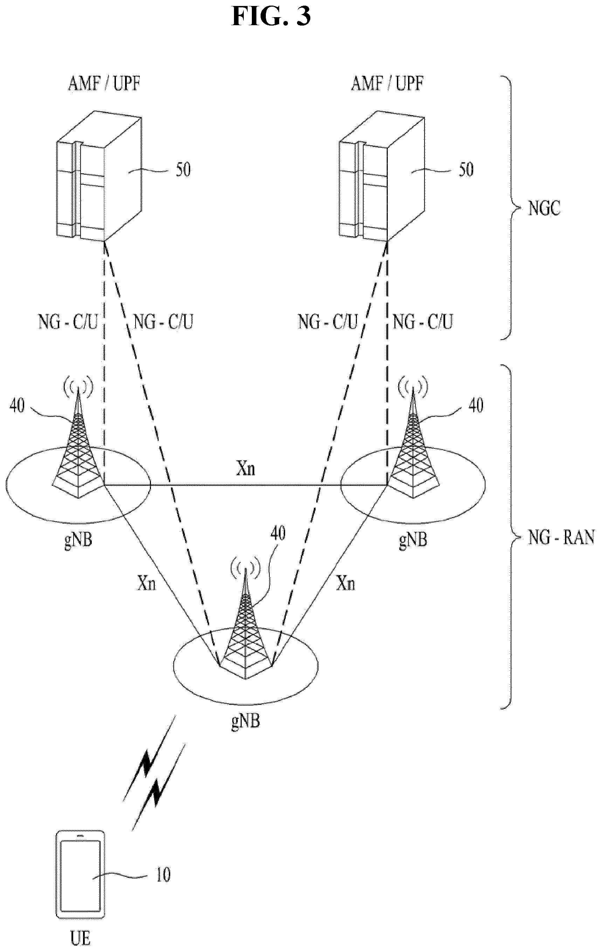

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

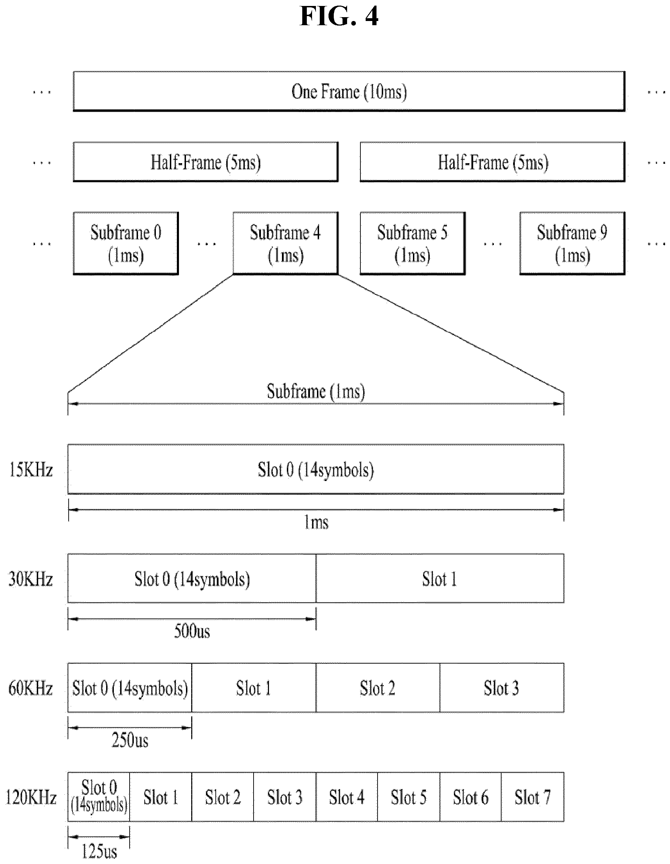

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS (15*2$^u$) | N$^{slot}_{symb}$ | N$^{frame,u}_{slot}$ | N$^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description). In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

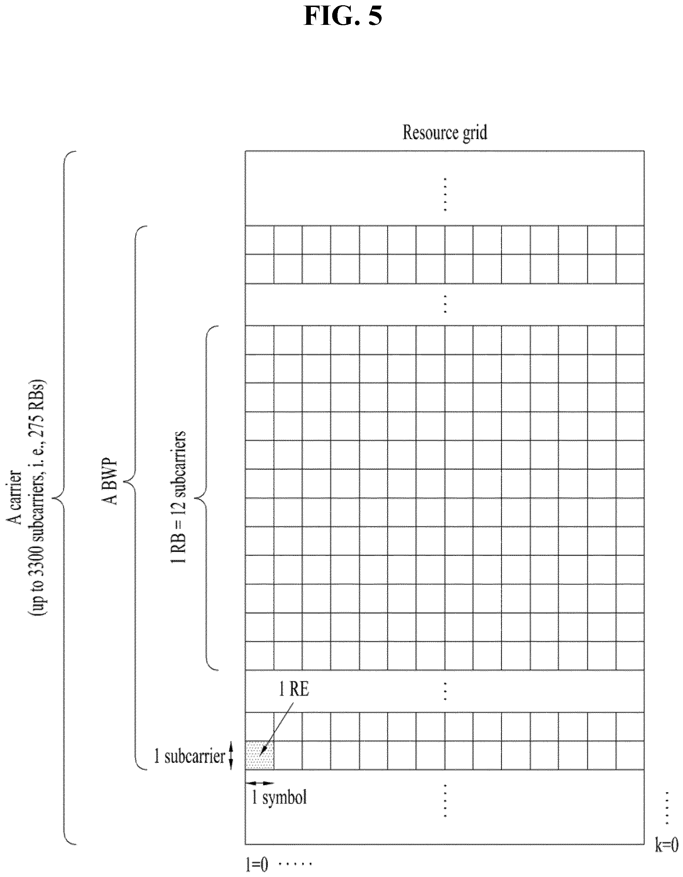

FIG. 5 illustrates the slot structure of a NR frame to which the present disclosure is applicable. Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

Hereinafter, V2X or sidelink (SL) communication will be described.

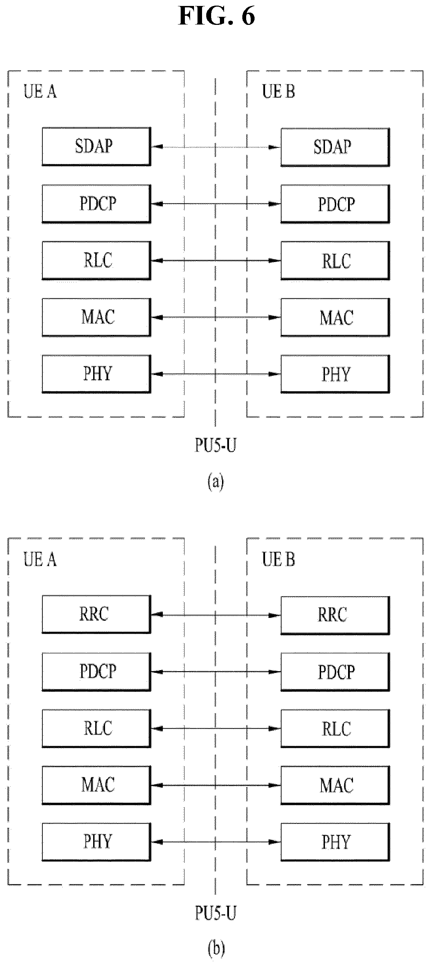

FIG. 6 illustrates a radio protocol architecture for SL communication. Specifically, FIG. 6-(a) shows a user plane protocol stack of NR, and FIG. 6-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

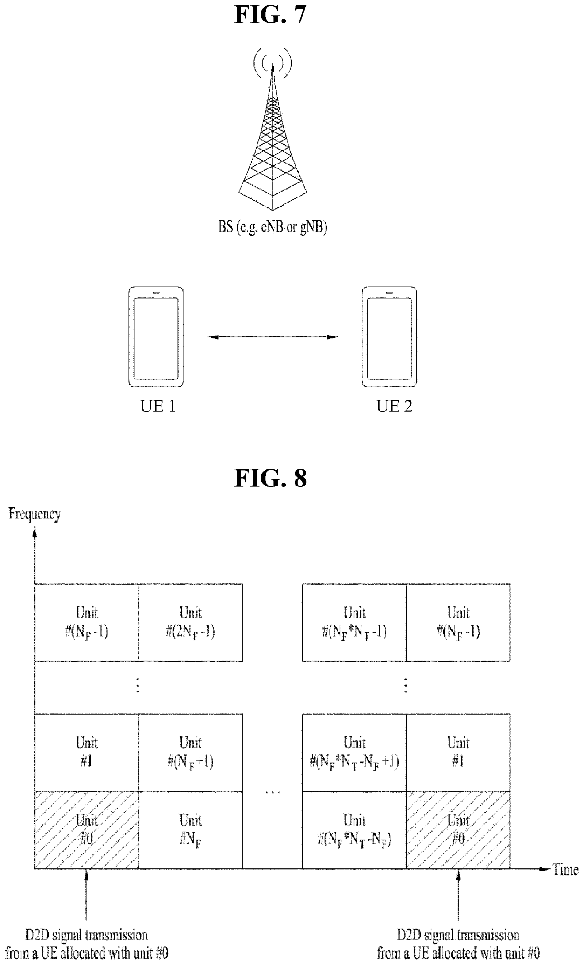

FIG. 7 illustrates UEs performing V2X or SL communication.

Referring to FIG. 7, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 8 illustrates resource units for V2X or SL communication.

Referring to FIG. 8, the frequency resources of a resource pool may be divided into NF sets, and the time resources of the resource pool may be divided into NT sets. Accordingly, a total of NF * NT resource units may be defined in the resource pool. FIG. 8 shows an exemplary case where the resource pool is repeated with a periodicity of NT subframes.

As shown in FIG. 8, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.

(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.

(3) The discovery channel may be a resource pool used for the transmitting UE to transmit information such as the identifier (ID) thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

## Vehicular Communications for ITS

An intelligent transport system (ITS) utilizing vehicle-to-everything (V2X) may mainly include an access layer, a network & transport layer, a facilities layer, an application layer, security and management entities, etc. Vehicle communication may be applied to various scenarios such as vehicle-to-vehicle communication (V2V), vehicle-to-network communication (V2N or N2V), vehicle-to-road side unit (RSU) communication (V2I or I2V), RSU-to-RSU communication (I2I), vehicle-to-pedestrian communication (V2P or P2V), and RSU-to-pedestrian communication (I2P or P2I). A vehicle, a BS, an RSU, a pedestrian, etc. as the subjects of vehicle communication are referred to as intelligent transport system (ITS) stations.

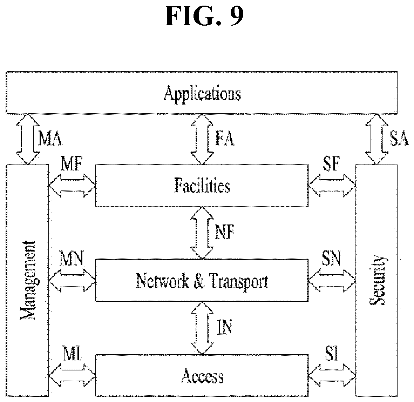

FIG. 9 is a diagram for explaining an ITS station reference architecture.

The ITS station reference architecture may include an access layer, a network & transport layer, a facilities layer, entities for security and management, and an application layer at the top. Basically, the ITS station reference architecture follows a layered OSI model.

Specifically, features of the ITS station reference architecture based on the OSI model are illustrated in FIG. 9. The access layer of the ITS station corresponds to OSI layer 1 (physical layer) and layer 2 (data link layer), the network & transport layer of the ITS station corresponds to OSI layer 3 (network layer) and layer 4 (transport layer), and the facilities layer of the ITS station corresponds to OSI layer 5 (session layer), layer 6 (presentation layer), and layer 7 (application layer).

The application layer, which is located at the highest layer of the ITS station, may actually implement and support a use-case and may be selectively used according to the use-case. The management entity serves to manage all layers in addition to managing communication and operations of the ITS station. The security entity provides security services for all layers. Each layer of the ITS station exchanges data transmitted or received through vehicle communication and additional information for various purposes through an interface. The abbreviations of various interfaces are described below.

MA: Interface between management entity and application layer
MF: Interface between management entity and facilities layer
MN: Interface between management entity and networking & transport layer
MI: Interface between management entity and access layer
FA: Interface between facilities layer and ITS-S applications
NF: Interface between networking & transport layer and facilities layer
IN: Interface between access layer and networking & transport layer
SA: Interface between security entity and ITS-S applications
SF: Interface between security entity and facilities layer
SN: Interface between security entity and networking & transport layer
SI: Interface between security entity and access layer

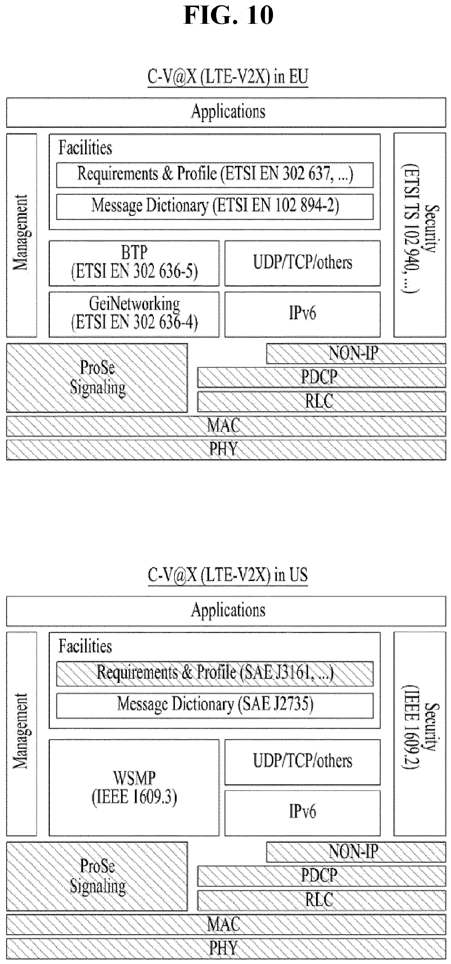

FIG. 10 illustrates an example of structure of an ITS station that may be designed and applied based on a reference architecture.

A main concept of the ITS station reference architecture is to allow each layer with a special function to process communication on a layer basis, between two end vehicles/users included in a communication network. That is, when a V2V message is generated, the data is passed through each layer downwards layer by layer in the vehicle and the ITS system (or other ITS-related UEs/systems), and a vehicle or ITS system (or other ITS-related UEs/systems) receiving the message passes the message upwards layer by layer.

The ITS system operating through vehicle communication and the network was organically designed in consideration of various access technologies, network protocols, communication interfaces, etc. to support various use-cases, and the roles and functions of each layer described below may be changed depending on a situation. The main functions of each layer will be briefly described.

The application layer actually implements and supports various use-cases. For example, the application layer provides security, efficient traffic information, and other entertainment information.

The application layer controls an ITS station to which an application belongs in various manners or provides services by transferring a service message to an end vehicle/user/infrastructure through the access layer, the network & transport layer, and the facilities layer, which are lower layers of the application layer, by vehicle communication. In this case, the ITS application may support various use-cases. In general, these use-cases may be supported by grouping into other applications such as road-safety, traffic efficiency, local services, and infotainment. Application classification, use-cases, etc. may be updated when a new application scenario is defined. Layer management serves to manage and service information related to operation and security of the application layer, and the related information is transmitted and shared bidirectionally through an MA and an SA (or service access point (SAP), e.g., MA-SAP or SA-SAP). A request from the application layer to the facilities layer or a service message and related information from the facilities layer to the application layer may be delivered through an FA.

The facilities layer serves to support effective implementation of various use-cases defined in an application layer of a higher layer. For example, the facilities layer may perform application support, information support, and session/communication support.

The facilities layer basically supports the 3 higher layers of the OSI model, for example, a session layer, a presentation layer, and the application layer, and functions. Specifically, the facilities layer provides facilities such as application support, information support, and session/communication support, for the ITS. Here, the facilities mean components that provide functionality, information, and data.

The application support facilities support the operation of ITS applications (mainly generation of a message for the ITS, transmission and reception of the message to and from a lower layer, and management of the message). The application support facilities include a cooperative awareness (CA) basic service and a decentralized environmental notification (DEN) basic service. In the future, facilities entities for new services such as cooperative adaptive cruise control (CACC), platooning, a vulnerable roadside user (VRU), and a collective perception service (CPS), and related messages may be additionally defined.

The information support facilities provide common data information or a database to be used by various ITS applications and includes a local dynamic map (LDM).

The session/communication support facilities provide services for communications and session management and include an addressing mode and session support.

Facilities may be divided into common facilities and domain facilities.

The common facilities are facilities that provide common services or functions required for various ITS applications and ITS station operations, such as time management, position management, and service management.

The domain facilities are facilities that provide special services or functions required only for some (one or more) ITS applications, such as a DEN basic service for road hazard warning applications (RHW). The domain facilities are optional functions and are not used unless supported by the ITS station.

Layer management serves to manage and service information related to the operation and security of the facilities layer, and the related information is transmitted and shared bidirectionally through an MF and an SF (or MF-SAP and SF-SAP). The transfer of service messages and related information from the application layer to the facilities layer or from the facilities layer to the application layer is performed through an FA (or FA-SAP), and bidirectional service messages and related information between the facilities layer and the lower networking & transport layer are transmitted by an NF (or NF-SAP).

The network & transport layer servers to configure a network for vehicle communication between homogenous or heterogeneous networks through support of various transport protocols and network protocols. For example, the network & transport layer may provide Internet access, routing, and vehicle networking using Internet protocols such as TCP/UDP+IPv6 and form a vehicle network using a basic transport protocol (BTP) and GeoNetworking-based protocols. In this case, networking using geographic position information may also be supported. A vehicle network layer may be designed or configured depending on technology used for the access layer (access layer technology-independently) or regardless of the technology used for the access layer (access layer technology-independently or access layer technology agnostically).

Functionalities of the European ITS network & transport layer are as follows. Basically, functionalities of the ITS network & transport layer are similar to or identical to those of OSI layer 3 (network layer) and layer 4 (transport layer) and have the following characteristics.

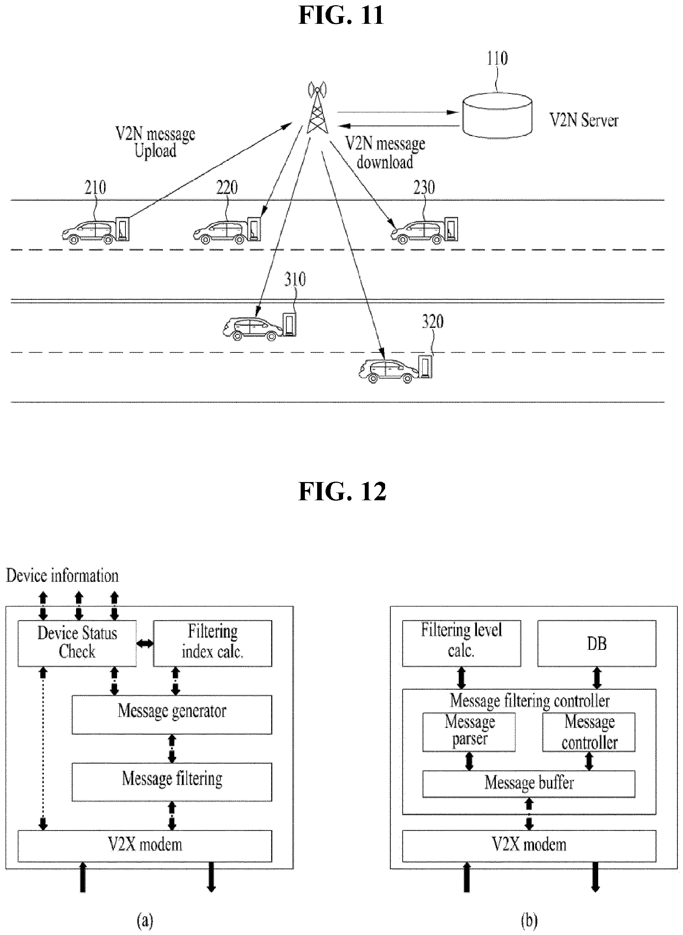

The transport layer is a connection layer that delivers service messages and related information received from higher layers (the session layer, the presentation layer, and the application layer) and lower layers (the network layer, the data link layer, and the physical layer). The transport layer serves to manage data transmitted by an application of the ITS station so that the data accurately arrives at an application process of the ITS station as a destination. Transport protocols that may be considered in European ITS include, for example, TCP and UDP used as legacy Internet protocols as illustrated in FIG. 11, and there are transport protocols only for the ITS, such as the BTS.

The network layer serves to determine a logical address and a packet forwarding method/path and add information such as the logical address of a destination and the forwarding path/method to a header of the network layer in a packet received from the transport layer. As an example of the packet method, unicast, broadcast, and multicast between ITS stations may be considered. Various networking protocols for the ITS may be considered, such as GeoNetworking, IPv6 networking with mobility support, and IPv6 over GeoNetworking. In addition to simple packet transmission, the GeoNetworking protocol may apply various forwarding paths or transmission ranges, such as forwarding using position information about stations including vehicles or forwarding using the number of forwarding hops.

Layer management related to the network & transport layer serves to manage and provide information related to the operation and security of the network & transport layer, and the related information is transmitted and shared bidirectionally through an MN (or MN-SAP) and an SN (or SN-SAP). Transmission of bidirectional service messages and related information between the facilities layer and the networking & transport layer is performed by an NF (or NF-SAP), and service messages and related information between the networking & transport layer and the access layer are exchanged by an IN (or IN-SAP).

A North American ITS network & transport layer supports IPv6 and TCP/UDP to support existing IP data like Europe, and a wave short message protocol (WSMP) is defined as a protocol only for the ITS.

A packet structure of a wave short message (WSM) generated according to the WSMP includes a WSMP header and WSM data carrying a message. The WSMP header includes Version, PSID, WSMP header extension fields, WSM WAVE element ID, and Length.

Version is defined by a WsmpVersion field indicating an actual WSMP version of 4 bits and a reserved field of 4 bits. PSID is a provider service identifier, which is allocated according to an application in a higher layer and helps a receiver to determine an appropriate higher layer. Extension fields is a field for extending the WSMP header, and includes information such as a channel number, a data rate, and transmit power used. WSMP WAVE element ID specifies the type of a WSM to be transmitted. Length specifies the length of transmitted WSM data in octets through a WSMLength field of 12 bits, and the remaining 4 bits are reserved. LLC Header allows IP data and WSMP data to be transmitted separately and is distinguished by Ethertype of a SNAP. The structures of the LLC header and the SNAP header are defined in IEEE802.2. When IP data is transmitted, Ethertype is set to 0x86DD in the LLC header. When WSMP is transmitted, Ethertype is set to 0x88DC in the LLC header. The receiver identifies Ethertype. If Ethertype is 0x86DD, the receiver transmits upward the packet to an IP data path, and if Ethertype is 0x88DC, the receiver transmits upward the packet to a WSMP path.

The access layer serves to transmit a message or data received from a higher layer on a physical channel. As access layer technologies, ITS-G5 vehicle communication technology based on IEEE 802.11p, satellite/broadband wireless mobile communication technology, 2G/3G/4G (long-term evolution (LTE), etc.)/5G wireless cellular communication technology, cellular-V2X vehicle-dedicated communication technologies such as LTE-V2X and NR-V2X (new radio), broadband terrestrial digital broadcasting technology such as DVB-T/T2/ATSC3.0, and GPS technology may be applied.

A data link layer is a layer that converts a physical line between adjacent nodes (or between vehicles) with noise into a communication channel without transmission error, for use in the higher network layer. The data link layer performs a function of transmitting/delivering/forwarding L3 protocols, a framing function of dividing data to be transmitted into packets (or frames) as transmission units and grouping the packets, a flow control function of compensating for a speed difference between a transmitter and a receiver, and a function of (because there is a high probability that an error and noise occurs randomly in view of the nature of a physical transmission medium) detecting a transmission error and correcting the error or detecting a transmission error based on a timer and an ACK signal by a transmitter in a method such as automatic repeat request (ACK) and retransmitting a packet that has not been correctly received. In addition, to avoid confusion between packets or ACK signals, the data link layer performs a function of assigning a sequence number to the packets and the ACK signals, and a function of controlling establishment, maintenance, and disconnection of a data link between network entities, and data transmission between network entities. The main functions of logical link control (LLC), radio resource control (RRC), packet data convergence protocol (PDCP), radio link control (RLC), medium access control (MAC), and multichannel operation (MCO) included in the data link layer of FIG. 11 will be described below.

An LLC sub-layer enables the use of different lower MAC sub-layer protocols, and thus enables communication regardless of network topology. An RRC sub-layer performs functions such as broadcasting of cell system information required for all UEs within a cell, management of delivery of paging messages, management (setup/maintenance/release) of RRC connection between a UE and an E-UTRAN, mobility management (handover), transmission of UE context between eNodeBs during handover, UE measurement reporting and control therefor, UE capability management, temporary assignment of a cell ID to a UE, security management including key management, and RRC message encryption. A PDCP sub-layer may performs functions such as IP packet header compression in a compression method such as robust header compression (ROHC), cyphering of a control message and user data, data integrity, and data loss prevention during handover. RLC sub-layer delivers a packet received from the higher PDCP layer in an allowed size of the MAC layer through packet segmentation/concatenation, increases data transmission reliability by transmission error and retransmission management, checks the order of received data, reorders data, and checks redundancy. A MAC sub-layer performs functions such as control of the occurrence of collision/contention between nodes for use of shared media among multiple nodes, matching a packet delivered from the higher layer to a physical layer frame format, assignment and identification of the address of the transmitter/receiver, detection of a carrier, collision detection, and detection of obstacles on the physical medium. An MCO sub-layer enables efficient provision of various services on a plurality of frequency channels. The main function of MCO sub-layer is to effectively distribute traffic load of a specific frequency channel to other channels to minimize collision/contention of communication information between vehicles in each frequency channel.

The physical layer is the lowest layer in the ITS layer architecture. The physical layer defines an interface between a node and a transmission medium and performs modulation, coding, and mapping of a transport channel to a physical channel, for bit transmission between data link layer entities and informs the MAC sub-layer of whether a wireless medium is busy or idle by carrier sensing or clear channel assessment (CCA).

A Soft V2X system may be a system in which a Soft V2X server receives a VRU message or a personal safety message (PSM) from a vulnerable road user (VRU) or a V2X vehicle and transfers information on a neighbor VRU or vehicle based on the VRU message or the PSM message or may analyze a road condition, etc. on which neighbor VRUs or vehicles move and may transmit a message informing a neighbor VRU or vehicle of a collision warning, etc. based on the analyzed information (e.g., through a downlink signal) via V2X communication using a UU interface. Here, the VRU message may be a message transmitted to the Soft V2X server through the UU interface, and may include mobility information about the VRU, such as a position, a movement direction, a movement path, and a speed of the VRU. That is, the Soft V2X system may use a method of receiving mobility information of VRUs and/or vehicles related to V2X communication through the UU interface and controlling a driving route or a VRU movement flow of the VRU, etc. based on the mobility information received by the softV2X server, such as a network. The Soft V2X system may be configured in relation to V2N communication.

User equipment or pedestrian equipment (VRU device) that is difficult to perform direct communication (PC5, DSRC) related to V2X communication can provide or receive driving information and mobility information to nearby vehicles or VRUs through the Soft V2X system based on the UU interface. Through this, the user equipment or pedestrian equipment (VRU device) that is difficult to perform the direct communication (PC5, DSRC) can be protected from surrounding vehicles.

When V2X messages are transmitted based on V2N, due to the long-range communication characteristics, a message transmitted to the server in UL may be forwarded to the UE in DL according to predetermined rules. In this case, since the message is encoded according to various encoding rules, the server needs to decode the message to obtain information included in the message. In particular, when a plurality of UEs upload (or transmit) various data randomly, the server needs to efficiently classify the uploaded messages and forward the messages appropriately to UEs that require the messages.

Hereinafter, methods by which a server flexibly filter messages from UEs to efficiently provide services will be described. Herein, filtering messages means that upon receiving a message from UE A, the server forwards the message to only UEs that may be affected by UE A, rather than forwarding the message to all UEs adjacent to UE A. Specifically, the present disclosure proposes methods by which the UE extracts the state of the UE based on information received from the server and transmits a message generated based on the extracted state of the UE to the server and methods by which the server perform filtering based on the message received from the UE. The message transmitted from the UE to the server may be referred to as a V2X message, V2N message, or Soft V2X message, and these terms may be used interchangeably herein. In addition, the UE may refer to a V2X device. Depending on embodiments, the UE may be referred to as a device, V2X device, Soft V2X device, V2X UE, or Soft V2X UE, but the present disclosure is not limited thereto.

According to proposed methods, the server may filter messages based on the lane status (or lane information) of vehicles. In this case, V2X devices may include devices installed in vehicles or devices carried by users inside vehicles. However, the present disclosure is not limited thereto. Thus, communication between the server and vehicles may refer to communication between the server and (V2X) devices installed in vehicles or carried by users inside vehicles. The lane status of vehicles may be determined based on the direction of a vehicle on a road, the distance from a vehicle to the center lane (e.g., distance to the center lane), and the ID of a lane. For example, the lane ID may refer to an identifier for identifying each lane when there are multiple lanes on the road, and information on the ID of each lane may be shared in advance between the server and devices.

FIG. 11 is a diagram for explaining an operation of filtering messages based on the lane status of vehicles according to a proposed embodiment. When there is a center lane on the road, the server does not forward messages transmitted from vehicles (or V2X devices) positioned in the opposite lane. Referring to FIG. 11, in the prior art, when a first vehicle 210 transmits (or uploads) a message to the server, the server may forward the message transmitted from the first vehicle 210 to all adjacent vehicles 220, 230, 310, and 320. However, information on the first vehicle 210 does not affect the safe driving of second vehicles 310 and 320 on the opposite side of the center lane. Therefore, when the message from the first vehicle 210 is forwarded to the second vehicles 310 and 320, it unnecessarily consumes the power of the second vehicles 310 and 320 to process the message from the first vehicle 210, which potentially leads to false alarms. According to the proposed methods, the server may filter messages from vehicles driving in the opposite direction, thereby alleviating the burden on UEs in vehicles to process unnecessary messages. In other words, the server does not forward the message transmitted from the first vehicle 210 to the second vehicles 310 and 320 located on the opposite side of the first vehicle 210.

For the proposed method, blocks (or units) for message filtering may be added to the UE (or device) and server. FIG. 12 is a diagram illustrating the configurations of a UE and a server according to the proposed methods.

Referring to FIG. 12, to enable the server to perform message filtering, the UE (e.g., V2X UE) may include a block for calculating a filtering index value. The UE may receive status information on the UE through a state check block to calculate the filtering index value and also receive additional information from the server. In this case, the status information on the UE may be detected by a plurality of sensors included in the UE or received from the server, but the present disclosure is not limited thereto. The additional information received from the server may refer to information required to assess the status of the UE. For example, the additional information may include supplementary road data (road information, $\theta_{range}$, Z-level threshold, etc.), which will be described later. The UE may calculate the filtering index value based on the three proposed methods. Specifically, the UE may calculate the filtering index value based on information on the direction of a vehicle including the UE, z-axis level information, or road ID information, but the present disclosure is not limited thereto. For example, the filtering index value may represent one of two values indicating whether filtering is applied (e.g., '0' or '1'), or the filtering index value may represent one value among a plurality of values used to determine whether filtering is performed. However, the present disclosure is not limited thereto. The UE may adjust the transmission and reception period of messages based on the calculated filtering index value. In addition, the UE may add the filtering index value to a V2X message and transmit the V2X message to the server (via a V2X modem)

According to an embodiment, the server (e.g., Soft V2X server) may forward the V2X message received through the V2X modem to a message filtering control block. The message filtering control block may temporarily store a message received through a message buffer and extract the filtering index value from the message through a message parser. A filtering level calculation block may calculate a filtering level based on the extracted filtering index value, and the message filtering control block may filter messages based on the calculated filtering level. For example, when the filtering index value is represented by one of two values (i.e., 0 or 1), if the filtering index value is 1, a related message may be filtered, whereas if the filtering index value is 0, the message may not be filtered. Additionally, according to an embodiment, if the filtering index value is 0, a related message may be filtered, whereas if the filtering index value is 1, the message may not be filtered. Alternatively, according to an embodiment, the filtering index value may be represented as one value among a plurality of levels within a predetermined range. In this case, whether filtering is performed may be determined depending on whether the filtering index value exceeds (or falls below) a predetermined threshold, but the present disclosure is not limited thereto.

Hereinafter, a V2N-dedicated message structure for processing V2N messages will be described. In addition, a method of filtering messages based on the V2N-dedicated message structure will also be described.

The V2N service allows the UE and server to communicate based on message queuing telemetry transport (MQTT) technology. The UE periodically reports the location and status thereof to the server based on the MQTT technology. For example, the UE periodically generates and publishes a message including information on the status thereof. Publishing a message by the UE may including uploading by the UE the message to the server. In this case, the transmission period of the message may be determined based on the type and service quality of the V2N service. The server may forward the messages published by the UE to other UEs. UEs enrolled in the V2N service may subscribe to topics corresponding to their areas of interest and receive messages published within the corresponding areas of interest from the server.

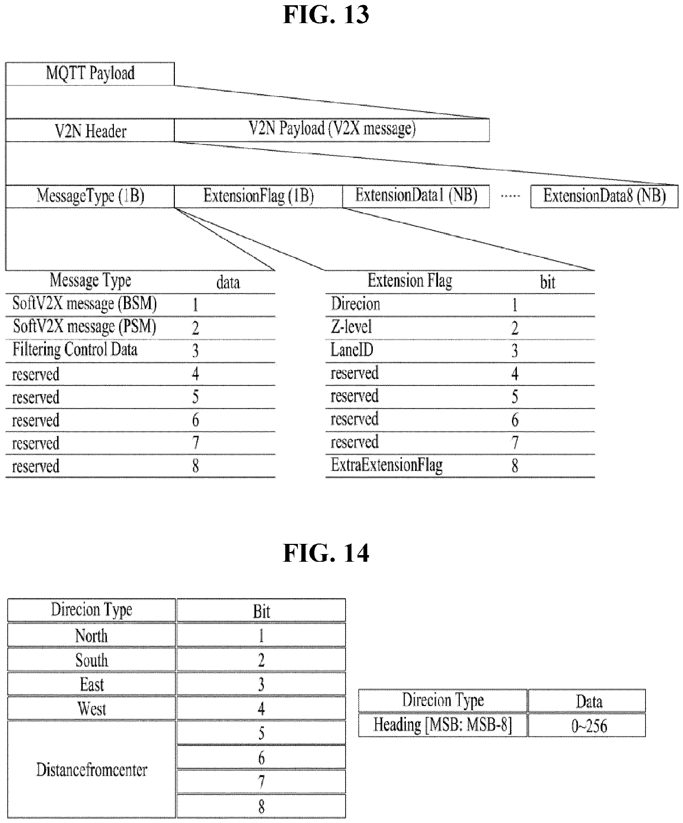

FIG. 13 illustrates the structure of a message according to a proposed embodiment. Referring to FIG. 13, a V2X message may be encapsulated (or encoded) and transmitted for additional functions, instead of being transmitted directly through the payload (e.g., MQTT payload) of the lower layer. A V2N message consists of a V2N header and a V2N payload, and the encoded V2X message is transmitted through the V2N payload. The V2N header may include the following fields: Message Type indicating the type of V2X message, Extension Flag for extension, and Extension Data corresponding to a flag.

When the UE uploads a message to the server, the message type may be a Soft V2X message (basic safety message (BSM)). In this case, information about QoS priority levels of the UE may be transmitted through an extension field (i.e., an extension flag field and an extension data field). In this case, information on the direction of a vehicle, information on a Z-axis level indicating layers based on the altitude of the vehicle, and information on the ID of a lane may be transmitted by an extension field (i.e., extension flag field and extension data field). For example, the extension flag field may be composed of 8 bits as shown in FIG. 13, but the present disclosure is not limited thereto. In this case, each bit may serve as an identifier for identifying the information on the direction of the vehicle, the information on the Z-axis level of the vehicle, and the information on the ID of the lane. Referring to Figure 13, the information on the direction of the vehicle, the information on the Z-axis level of the vehicle, and the information on the ID of the lane may be represented as Direction," "Z-level" (or "Layer"), and "LaneID," respectively. However, the present disclosure is not limited to that. Accordingly, if the information on the direction of the vehicle is included in the extension field, a bit corresponding to the "Direction" type in an extension flag field (i.e., first bit) may be set to 1, and the information on the direction of the vehicle may be included in an extension data field corresponding to the "Direction" type. If the information on the Z-axis level of the vehicle is included in the extension field, a bit corresponding to the "Z-level" type (i.e., second bit) may be set to 1, and the information on the Z-axis level of the vehicle may be included in an extension data field corresponding to the "Z-level" type. If the information on the ID of the lane is included in the extension field, a bit corresponding to the "LaneID" type (i.e., third bit) may be set to 1, and the information on the ID of the lane may be included in an extension data field corresponding to the "LaneID" type. Further, referring to FIG. 13, the last bit (or eighth bit) of the extension flag field may be a bit indicating whether there is an additional extension flag field. For example, if the extension field includes more than 8 data types, an additional extension flag field may be required. Accordingly, if the last bit value of the extension flag field is set to 1, an additional extension flag field may be generated. A data types to be included in the extension field may be added based on the additional extension flag field.

In the embodiments described above, to represent information on a road, either a MapData message or a SignalPhaseAndTiming (SPAT) message may be used. For instance, the MapData message may provide the specific geometric structure of the road at each intersection based on a static map (or HD map). The MapData message may include intersection shape and road section information such as lanes, lanes, and pedestrian paths. The MapData message may include information on intersection shapes such as lanes, roads, sidewalks, and information on road sections. The SPAT message may provide traffic signal status and timing information for each entry and exit path at intersections. The SPAT message may be used in conjunction with the MAP message to reference entry and exit paths.

FIG. 14 illustrates an example in which information on the direction of a vehicle is included in an extension field according to a proposed embodiment.

If information on the direction of a vehicle is included in an extension field, the UE may extract direction information based on the direction in which the UE is traveling from information on the heading thereof. The extracted direction information may indicate a flag for each direction (for example, four directions: north, south, east, and west) and the distance from the center lane. Referring to FIG. 14, the direction information included in the extension field may be represented by 8 bits, where the 8 bits may include bits representing the four directions: north, south, east, and west and four bits representing the distance from the center lane. In some embodiments, the information on the direction of the vehicle may be extracted by the server. Referring to FIG. 14, the server may extract the most significant bit (MSB) 8 bits of heading information and transmit the MSB 8 bits to the UE, and the UE may include the received MSB 8 bits in the extension field.

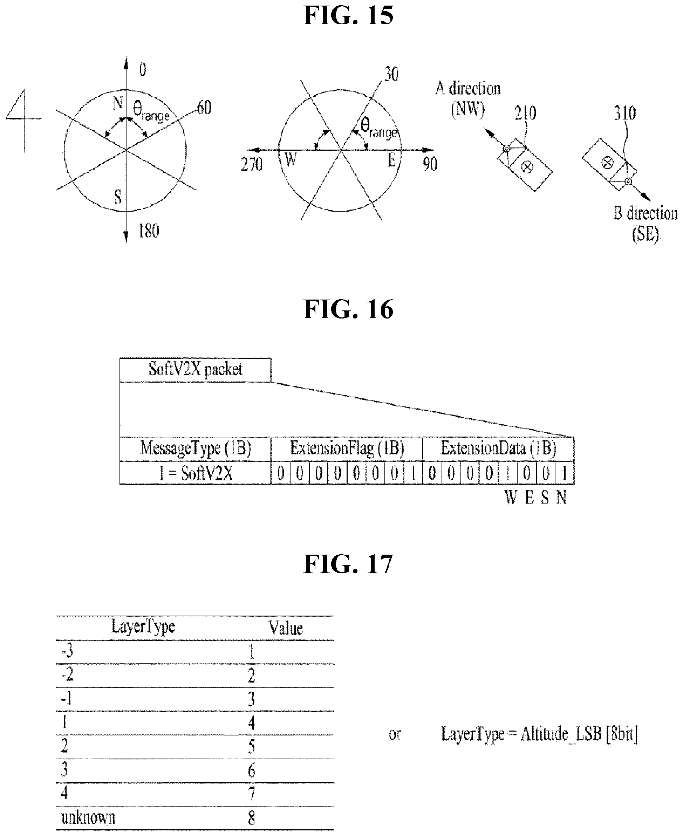

FIG. 15 is a diagram illustrating a method by which a UE extracts direction information according to a proposed embodiment.

Information on the heading of a vehicle may be based on a predetermined direction map, and the direction map may be configured based on a value received from the server. Referring to FIG. 15, a first vehicle 210 driving in direction A is included in the northward direction and the westward direction. Therefore, information on the direction of the first vehicle 210 may be represented as Northwest (NW). In contrast, a second vehicle 220 driving in direction B is included in the southward direction and the eastward directions. Therefore, information on the direction of the second vehicle 220 may be represented as Southeast (SE). FIG. 16 is a diagram illustrating a V2N message based on information on the direction of a first vehicle according to an embodiment. As shown in FIG. 16, a first vehicle 210 (or UE) driving in the NW direction may extend the header of a (V2N) message (or Soft V2X packet) to add the "Direction" type indicating direction information and set a bit corresponding to the NW direction in an extension data field to 1. In other words, the first vehicle 210 driving in the NW direction may set the bit corresponding to the "Direction" type in an extension flag field to 1 and set the bit corresponding to the NW direction to 1 in the extension data field corresponding to the "Direction" type.

According to a proposed embodiment, Z-axis level information may be transmitted to the server through the extension field. For example, it is difficult to determine an elevated road solely based on X and Y coordinates (or information). Therefore, if information on the location of the UE is represented only by X-axis information and Y-axis information, incorrect collision alarms may occur because it is difficult to distinguish between a UE traveling on a road on the ground and a UE traveling on an elevated road. Accordingly, by transmitting information on the Z-axis level of the UE to the server through the extension field included in a V2N header, the UE may avoid receiving messages from UEs with no potential collision risk, which not only reduces the network load associated with message transmission and reception but also eliminates false alarms at the UE. When the UE processes Z-axis level information (or when the UE extracts the Z-axis level information), the UE may calculate and represent layers based on information received from the server. For example, referring to FIG. 17, based on bound information received from the server, if the UE is positioned at the ground level, the UE may set "Layer" (or "Z-level") type information corresponding to the Z-axis level (or Z-level) to '1'. Alternatively, if the UE is positioned above the ground level, the UE may increment the value of the "Layer" type information in the positive direction. Conversely, if the UE is positioned below the ground level, the UE may increment the value of the "Layer" type information in the negative direction. When the server extracts the Z-axis level information on the UE and then transmits the information to the UE, the server may transmit the least significant bit (LSB) 8 bits of altitude information as the value of the "Layer" type information.

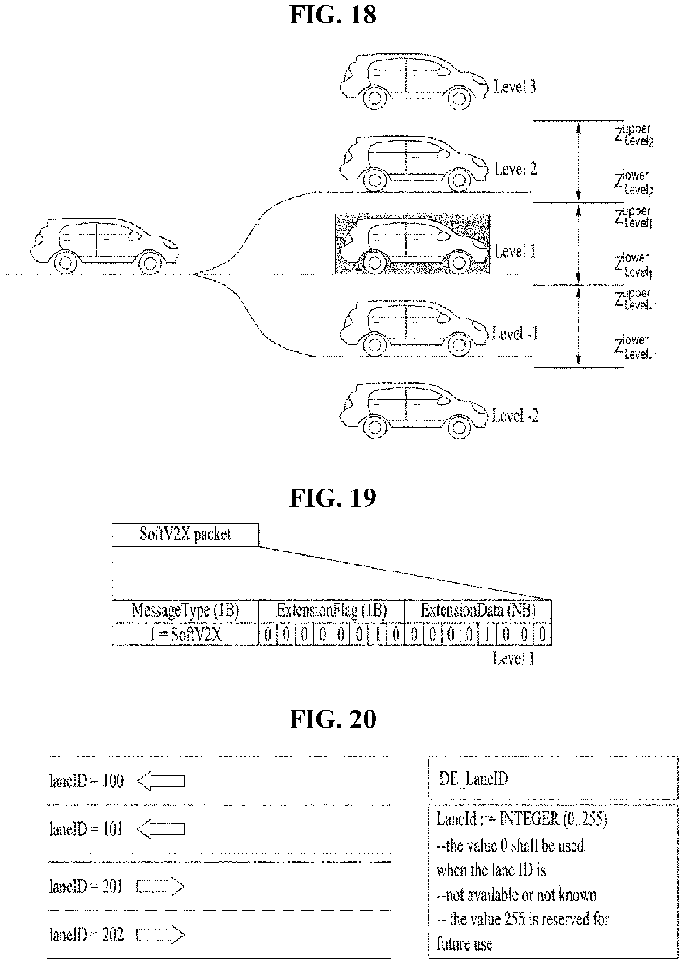

FIG. 18 a diagram illustrating a method by which a UE extracts Z-axis level information according to a proposed embodiment. The server may inform the UE in advance of the bounds of Z-axis levels based on the situation of a road. The UE may then compare the bounds of Z-axis levels received from the server with the Z-axis altitude value of the UE to measure the Z-axis level of the UE. For example, the server may inform the UE of the lower and upper bounds of the Z-axis level. As illustrated in FIG. 18, if the Z-axis value of the UE is within the range of the lower and upper bounds of Level 1, the UE may determine the Z-axis level of the UE to be Level 1 (or the ground level). Accordingly, if the Z-axis level of the UE is the ground level, which is '1', the UE may generate a message as shown in FIG. 19. Referring to FIG. 19, the UE may set a bit corresponding to the "Z-Level" type, which is the Z-axis level, in an extension flag field to '1'. The UE may transmit Z-axis level information on the UE by including the Z-axis level information in an extension data field corresponding to the "Z-level" type. Referring to FIG. 17, a bit corresponding to Level 1 in the extension data field is the fourth bit. Therefore, if the Z-axis level of the UE is Level 1, the UE may set the fourth bit of the extension data field corresponding to the "Z-level" type to '1'.

According to a proposed embodiment, information on the ID of a lane may be transmitted to the server through the extension field in the header, and the server may filter messages based on the lane ID information included in the header. In this case, LaneID information received from the server or the value of DE_LaneID used in the conventional map may be used as the lane ID information. The lane ID information may represent not only the direction of the lane but also the Z-axis level, but a lane map needs to be primarily structured for the road on which the UE is traveling.

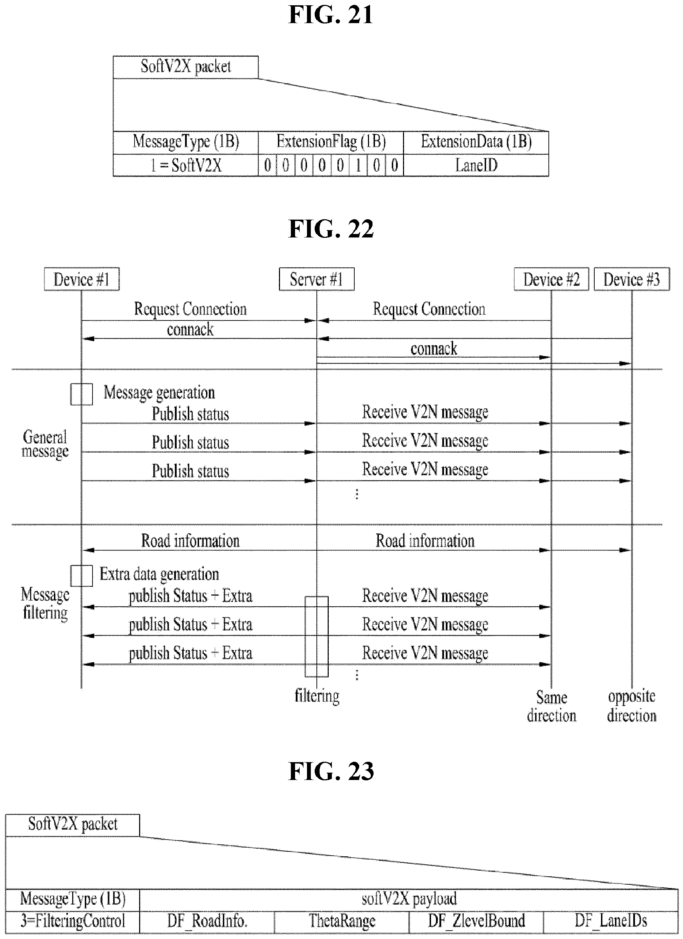

FIG. 20 is a diagram illustrating an example of using the value of DE_LaneID as lane ID information according to an embodiment. Referring to FIG. 20, the ID of a lane may have an integer value ranging from 0 to 255, and the direction of the lane may be identified based on the MSB of the lane ID. Thus, as shown in FIG. 20, lanes with IDs 100 and 101 and lanes with IDs 201 and 202 refer to lanes in opposite directions. FIG. 21 illustrates a method of configuring messages based on information on the ID of a lane according to a proposed embodiment. Referring to FIG. 21, when the UE transmits information on the ID of a lane to the server through an extension field of a header, the UE may set a bit corresponding to the "LaneID" type in the extension flag field (i.e., the third bit) to '1' and include the lane ID information in an extension data field corresponding to the "LaneID" type.

Compared to a method of transmitting information for message filtering to the server by including the information in a header based on the static features of the UE, information such as the driving direction or Z-level of the UE continuously varies depending on the reference point, and it is difficult to use a related filtering index value at intersections. Since the UE needs to continuously compare the status thereof with the status of a road, power consumption may increase. To address the aforementioned issue, the UE may receive basic information and control information for message filtering from the server through collaborative operations.

FIG. 22 is a diagram illustrating operations between a UE and a server according to a proposed embodiment. When services (e.g., V2N services) start, each UE (for example, UE #1, #2, and #3) may establish a connection with the server. Subsequently, each UE may generate a message according to predefined methods and publish the generated message (or upload the message to the server). The server may then forward the received message from each UE to all other UEs located in a corresponding area. All UEs in the area (device 2 and 3) may subscribe to the message.

When the server filters messages, the server may transmit additional road information (road information, $\theta_{range}$, Z-axis level thresholds) for message filtering to each UE. Based on the received additional road information, the UE may generate an extension data field in a header. Then, the UE may transmit a V2X message to the server by including the extension data field in the V2X message. Subsequently, based on the extension data included in the header of the received messages, the server may filter and forward the received message. Referring to FIG. 22, UE #2 may be a vehicle driving in the same direction as UE #1, while UE #3 may be a vehicle driving in the opposite direction to UE #1. Since UE #1 may not affect UE #2, which is traveling in the opposite direction, messages from UE #1 may be unnecessary for UE #2. Accordingly, the server may forward messages transmitted from UE #1 only to UE #2.

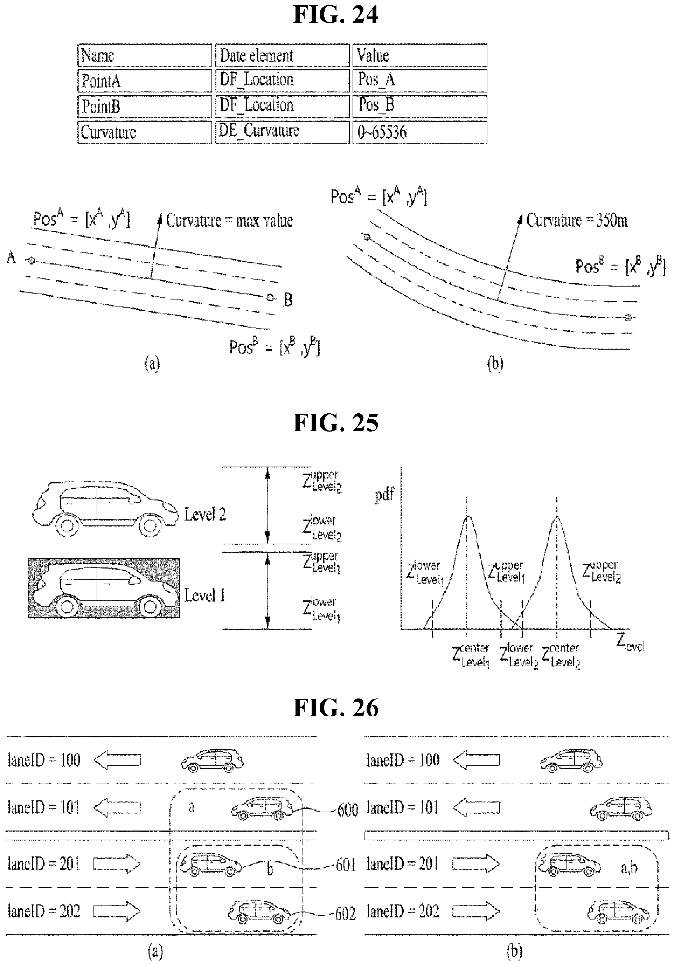

FIG. 23 is a diagram for explaining additional road information transmitted from a server to a UE according to an embodiment. The additional road information may be transmitted in the form of a Soft V2X packet. Referring to FIG. 23, the value of a 'MessageType' field of a Soft V2X header in the Soft V2X packet containing the additional road information is '3'. The value of '3' in the 'MessageType' field may indicate Filtering Control (i.e., FilteringControl) information. Referring to FIG. 23, the Soft V2X payload of the Soft V2X packet containing the additional road information may include the following fields: DF_RoadInfo representing road information, ThetaRange representing $\theta_{range}$, DF_ZlevelBound representing boundary values of a Z-axis level, and DF_LaneIDs defining the ID of each lane. Specifically, the DF_RoadInfo field may represent the shape of a road and a segment where message filtering is required. Referring to FIGS. 24(a) and 24(b), message filtering may be necessary between points A and B on the road. In this case, the DF_RoadInfo field may information on the locations of points A and B, which correspond to the starting and ending points of the segment where message filtering is required, as well as information on the curvature radius between points A and B. The locations of points A and B may be represented by the x-axis and y-axis coordinates as shown in FIGS. 24(a) and 24(b), but the present disclosure is not limited thereto. In this case, the curvature radius may be expressed as a value within a predetermined range, and for a straight road, the curvature radius may be set to the maximum value within the predefined range as shown in FIG. 24(a). Upon receiving the additional road information containing the DF_RoadInfo field from the server, the UE may extract and calculate filtering information only for the segment (i.e., between points A and B) where message filtering is required. For example, when lanes overlap or at intersections where ambiguity exists, the server may forward received messages to all UEs without filtering, thereby enhancing vehicle safety

When the server filters messages based on the Z-axis level, the server may receive information on the Z-axis altitudes of vehicles driving in a specific area and analyze the received Z values, which may be represented in the form of a probability distribution function (PDF) as shown in FIG. 25. Based on the PDF derived from the information on the Z-axis altitudes of the vehicles, the server may recognize the presence of roads with different elevations in the specific area. For example, referring to FIG. 25, based on the PDF, the server may separate the levels of each road and obtain boundary values of the Z-axis level (e.g., $Z_{level_1}^{lower}$, $Z_{level_1}^{upper}$, $Z_{level_2}^{lower}$, and $Z_{level_2}^{upper}$). Based on the acquired boundary values of the Z-axis level, the server may perform filtering on the messages received from the UE.

According to a proposed embodiment, message filtering may be performed based on lane ID information as described above. For example, if a message from a specific UE is provided to all UEs traveling on the same road, information on lanes on both sides may also be transmitted based on the lane ID of the current lane, regardless of the direction of the lane. Thus, the message may be provided to UEs traveling on lanes in the opposite direction. Depending on the speed of the UE, lanes that may influence each other may vary. Considering this situation, the server may determine lanes to be filtered based on information on the ID and direction of a lane being traveled as well as the total number of lanes on the road, which are collected from the UE. The server may filter the message received from the UE based on the information on the filtered lanes. In some embodiments, if lanes are determined to have no mutual influence based on map data on multi-lane roads, (for example, determined by the presence of a central divider), the server may filter messages.

FIG. 26 is a diagram illustrating an example in which message filtering is performed based on the presence or absence of a central divider according to an embodiment. Referring to FIG. 26(a), when there is no central divider on a road, message filtering may be performed based on lane ID information. In this case, a UE 601 travelling in a lane with LaneID 201 receives messages from both a UE 600 travelling in a lane with LaneID 101 and a UE 602 travelling in a lane with LaneID 202. Alternatively, the UE 601 may receive a message only from the UE 602 travelling in the lane with LaneID 202 and may not receive a message from the UE 600 travelling in the lane with LaneID 101.

However, as shown in FIG. 26(b), when the central divider exists on the road, even if the lane with LaneID 101 is adjacent to the lane with LaneID 201, it is difficult for the UE 600 travelling in the lane with LaneID 101 to influence the UE 601 travelling in the lane with LaneID 201 because the lane with LaneID 101 is located in the opposite direction to the lane with LaneID 201. Therefore, the messages from the UE 600 traveling in the lane with LaneID 101 may be unnecessary for the UE 601 traveling in the lane with LaneID 201. When the central divider exists on the road, even if the server receives a message from a UE located in an adjacent lane, the server may filter the message received from the corresponding UE. Accordingly, the UE 601 travelling in the lane with LaneID 201 may receive only the message from the UE 602 travelling in the lane with LaneID 202 and may not receive the message from the UE 600 travelling in the lane with LaneID 101.

In some embodiments, if the server is capable of checking information on the speed of the UE, the server may expand the range of lanes to which messages need to be forwarded.

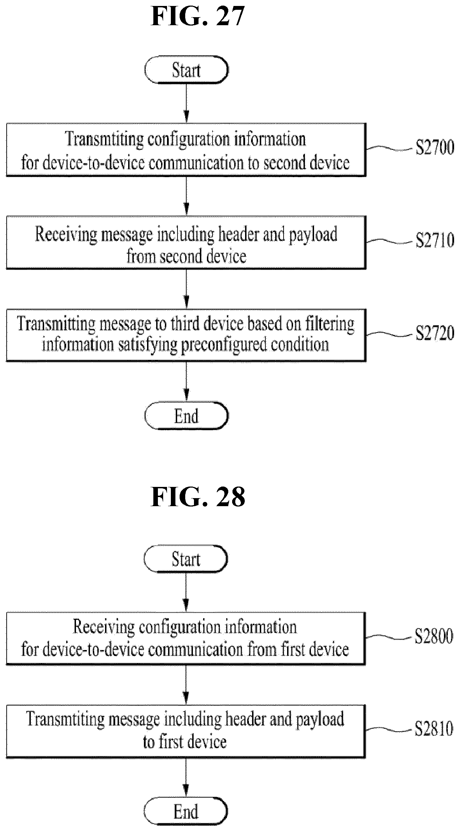

FIG. 27 is a flowchart illustrating operations of a first device according to an embodiment.

The first device according to the embodiment may transmit configuration information for direct communication between devices to a second device (S2700). For example, the first device may include the above-described server (e.g., V2N server, V2X server, or Soft V2X server), and the second device may include the above-described UE (e.g., V2X device, V2N device, or Soft V2X device). For instance, the first device may transmit the configuration information to the second device to provide V2N services. For example, the second device may connect to the first device, perform a subscription procedure for a topic of interest of the second device, and receive configuration information related to the subscription procedure. In this case, the second device may set a topic corresponding to an area where the second device is located as the topic of interest. The second device may receive messages published for the topic of interest by performing the subscription procedure for the topic.

In addition, the first device may receive a message including a header and a payload from the second device (S2710). In this case, the message may correspond to the V2N message described above. The header of the message may correspond to the V2N header shown in FIG. 13, and the payload of the message may correspond to the V2N payload shown in FIG. 13. The header may include an extension flag field containing a plurality of bits and an extension data field corresponding to each data type identified by the extension flag field. In this case, the extension flag field and the extension data field may be simply referred to as an extension field. The extension flag field is used to identify the data types included in the extension data field. Each bit in the extension flag field may represent a different data type. Thus, the extension flag field may represent each data type with one-bit information. The data types identified by the extension flag field may include at least one of the following information: the driving direction of a vehicle, the Z-axis level of the vehicle, and the ID of a lane ID. However, the present disclosure is not limited thereto. In this case, information on the driving direction of the vehicle may correspond to information on the direction of a vehicle described above. For example, as illustrated in FIGS. 13 to 21, for message filtering, the extension field may include at least one of the following: information on the direction of the vehicle, information on the Z-axis level of the vehicle, or information on the lane ID. The extension flag field may indicate whether the information on the driving direction of the vehicle, the information on the Z-axis level of the vehicle, and the information on the lane ID are included by first, second, and third bits, respectively. The header may include the same number of extension data fields as the number of data types identified based on the plurality of bit included in the extension flag field. For example, as shown in FIG. 16, when the extension field includes the information on the driving direction of the vehicle, the first bit of the extension flag field may be set to '1', and the information on the driving direction of the vehicle may be included in an extension data field corresponding to the first bit of the extension flag field. In this case, the extension data field may include direction information including east, west, north, and south, as well as information on the distance from a center lane, but the present disclosure is not limited thereto. For example, the above-described direction information is determined based on an angle measured with respect to the driving direction of the second device, and information on the angle may be transmitted from the first device. As shown in FIG. 19, if the information on the Z-axis level of the vehicle is included in the extension field, the second bit of the extension flag field may be set to '1', and the information on the Z-axis level of the vehicle may be included in an extension data field corresponding to the second bit of the extension flag field. In this case, the information on the Z-axis level of the vehicle may refer to information on one of a plurality of predetermined Z-axis levels based on the road on which the second device is driving. As shown in FIG. 21, if the information on the lane ID is included in the extension field, the third bit of the extension flag field may be set to '1', and the information on the lane ID may be included in an extension data field corresponding to the third bit. In this case, the information on the lane ID may include information on the ID that identifies the lane the second device is driving in.

The first device may forward the message to a third device based on filtering information obtained from the extension data field being satisfied predetermined conditions (S2730). For example, if the extension data field includes the information on the driving direction of the vehicle, the first device may forward the message received from the second device to the third device based on determining that the third device is driving in the same direction as the second device, based on the extension data field. In this case, based on determining that the third device and the second device are driving in opposite directions based on the extension data field, the first device may not forward the message from the second device to the third device. If the second device and third device are driving in the opposite directions, information on the driving of the second device may not affect the driving of the third device. Thus, the first device may not forward the message from the second device to the third device by filtering the message from the second device. As a result, the burden of message processing on the third device may decrease, and unnecessary network traffic load due to unnecessary message forwarding may also decrease. If the extension data field includes the information on the Z-axis level of the vehicle, the first device may not forward the message from the second device to the third device based on determining that the third device and the second device do not overlap on the Z axis, based on the extension data field. In other words, if the first device determines that the third device and the second device overlap on the Z-axis based on the extension data field, the first device may transmit the message from the second device to the third device. If the third device and the second device do not overlap on the Z axis (for example, if the second device is driving on a road on the ground and the third device is driving on an elevated road), the state of the second device may not affect the third device. Thus, the server may not forward the message from the second device to the third device by filtering the message from the second device. In this case, the filtering information may correspond to information on whether there is an overlap on the Z-axis and information on whether devices are driving in the same direction. In addition, the filtering information may correspond to a separate filtering index calculated based on the extension data field. Whether the message from the second device is to be transmitted to the third device may be determined based on whether the filtering index satisfies predetermined conditions. According to a proposed embodiment, the first device may determine whether to filter the message from the second device based on the extension flag field and extension data field included in the header. In other words, the first device may determine whether to filter the message from the second device by checking only the information included in the header without decoding the payload. Accordingly, the first device may more easily perform filtering of messages, and the third device may reduce the burden of processing unnecessary messages by receiving only messages that affect the driving thereof.

FIG. 28 is a diagram illustrating operations of a second device according to a proposed embodiment. Referring to FIG. 28, the second device according to an embodiment may receive configuration information on direct device-to-device communication from a first device (S2800). In addition, the second device may transmit a message including a header and a payload to the first device (S2810). In this case, the header may include an extension flag field containing a plurality of bits and an extension data field corresponding to each data type identified by the extension flag field. Whether the message is forwarded to the third device through the first device may be determined depending on whether filtering information obtained from the extension data field satisfies predetermined conditions. The specific operations according to the proposed embodiment may also be similarly applied to FIG. 28, as described in FIG. 27.

Hereinafter, a device to which various embodiments of the present disclosure may be applied will be described.

Although not limited thereto, various descriptions, functions, procedures, proposals, methods, and/or operational flow charts disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

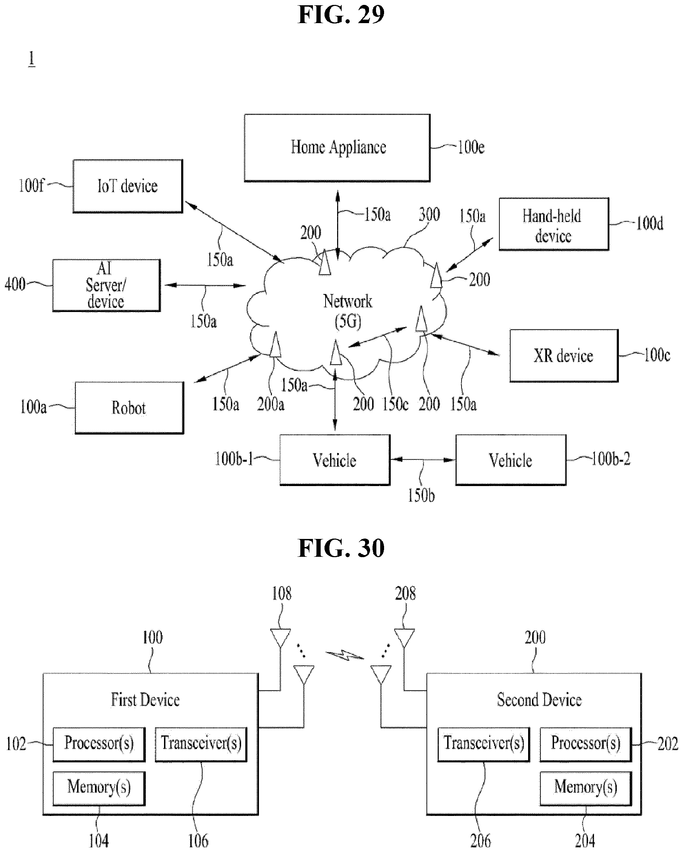

FIG. 30 illustrates a communication system 1 applied to the present disclosure.

Referring to FIG. 30, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

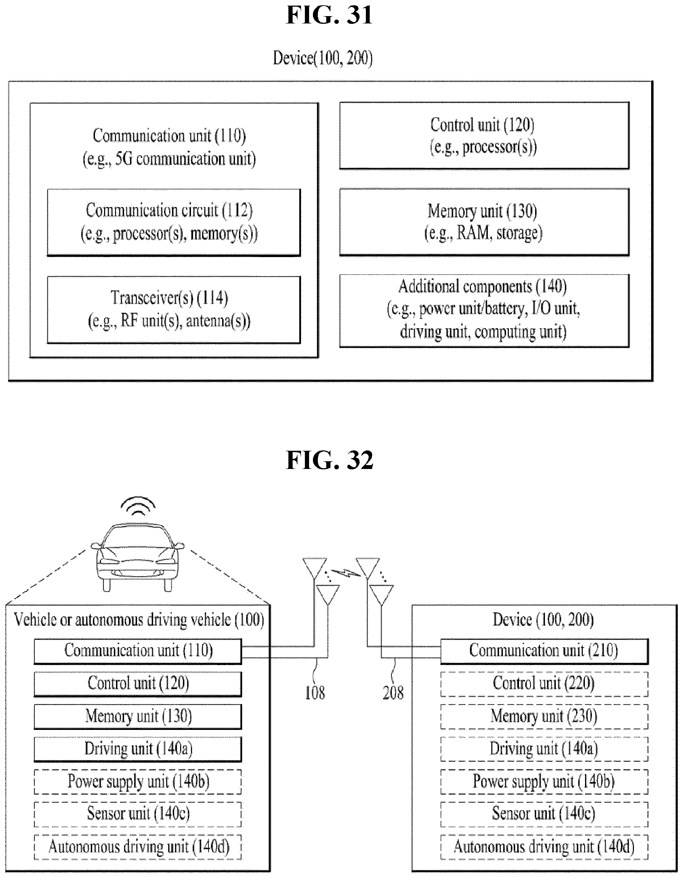

FIG. 31 illustrates a wireless device applicable to the present disclosure.

Referring to FIG. 31, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 30.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

In the present specification, at least one memory (e.g., 104 or 204) may store instructions or programs, and the instructions or the programs may, when executed by at least one processor, cause the at least one processor operably connected to the at least one memory to perform operations according to some embodiments or implements of the present specification.

In the present specification, a computer-readable storage medium may store at least one instruction or computer program, and the at least one instruction or computer program may, when executed by at least one processor, cause the at least one processor to perform operations according to some embodiments or implements of the present specification.

In the present specification, a processing device or apparatus may include at least one processor and at least one memory to be connected to the at least one processor. The at least one computer memory may store instructions or programs, and the instructions or the programs may, when executed by at least one processor, cause the at least one processor operably connected to the at least one memory to perform operations according to some embodiments or implements of the present specification.

FIG. 32 illustrates another example of a wireless device applied to the present disclosure. The wireless device may be implemented in various forms according to a use-case/service (refer to FIG. 30)

Referring to FIG. 32, wireless devices 100 and 200 may correspond to the wireless devices 100 and 200 of FIG. 31 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 27. For example, the transceiver(s) 114 may include the one or more transceivers 106 and 206 and/or the one or more antennas 108 and 208 of FIG. 31. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 30), the vehicles (100b-1 and 100b-2 of FIG. 30), the XR device (100c of FIG. 30), the hand-held device (100d of FIG. 30), the home appliance (100e of FIG. 30), the IoT device (100f of FIG. 30), a digital broadcast terminal, a hologram device, a public safety device, an MTC device, a medicine device, a fintech device (or a finance device), a security device, a climate/environment device, the AI server/device (400 of FIG. 30), the BSs (200 of FIG. 30), a network node, etc. The wireless device may be used in a mobile or fixed place according to a use-example/service.

In FIG. 32, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (100, 200) of the present specification may include LTE, NR, and 6G, as well as Narrowband Internet of Things for low power communication. At this time, for example, the NB-IoT technology may be an example of a Low Power Wide Area Network (LPWAN) technology and may be implemented in standards such as LTE Cat NB1 and/or LTE Cat NB2 and is not limited to the above-described names. Additionally or alternatively, the wireless communication technology implemented in the wireless devices (100, 200) of the present specification may perform communication based on LTE-M technology. In this case, as an example, the LTE-M technology may be an example of LPWAN technology and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (100, 200) of the present specification is at least one of ZigBee, Bluetooth, and Low Power Wide Area Network (LPWAN) considering low power communication and is not limited to the above-described names. As an example, ZigBee technology can generate personal area networks (PANs) related to small/low-power digital communication based on various standards such as IEEE 802.15.4 and may be called various names.

FIG. 33 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 33, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 32, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments or may be replaced with corresponding configurations or features of other embodiments. It is obvious that the embodiments may be configured by combining claims that do not have an explicit citation relationship in the claims or may be included as new claims by amendment after filing.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure may be applied to devices operating in wireless mobile communication systems.

**Claims**

1. An operation method for a first device in a wireless communication system, the method comprising:

transmitting configuration information for direct device-to-device communication to a second device;

receiving a message including a header and a payload from the second device, wherein the header includes an extension flag field including a plurality of bits and extension data fields respectively corresponding to data types identified by the extension flag field; and

forwarding the message to a third device based on filtering information obtained from the extension data field being satisfied a predetermined condition.

2. The method of claim 1, wherein each of the plurality of bits represents a different data type, and wherein a number of the extension data fields included in the header is equal to a number of the data types identified based on values of the plurality of bits.

3. The method of claim 1, wherein the data types identified by the extension flag field includes at least one of a driving direction, a z-axis level, or a lane identifier (ID).

4. The method of claim 3, wherein an extension data field corresponding to the driving direction includes directional information including north, south, east, and west and information on a distance to a center lane.

5. The method of claim 4, wherein the directional information is determined based on an angle measured based on the driving direction of the second device, and wherein information on the angle is transmitted from the first device.

6. The method of claim 4, wherein based on determining, from the extension data field, that the third device is driving in a same direction as the second device, the message is forwarded to the third device.

7. The method of claim 4, wherein based on determining, from the extension data field, that the third device is driving in an opposite direction to the second device, the message is not forwarded to the third device.

8. The method of claim 3, wherein an extension data field corresponding to the z-axis level includes information on an altitude of the second device on a z-axis, and wherein the information on the altitude of the second device includes information on one of a plurality of z-axis levels predetermined based on a road on which the second device is driving.

9. The method of claim 8, wherein based on determining, from the extension data field, that the third device and the second device do not overlap on the z-axis, the message is not forwarded to the third device.

10. The method of claim 3, wherein an extension data field corresponding to the lane ID includes information on an ID of a lane in which the second device is driving.

11. The method of claim 10, wherein based on determining, from the extension data field, that the third device is driving in a same direction as the second device, the message is forwarded to the third device.

12. The method of claim 1, wherein the filtering information includes a filtering index, and wherein based on a value of the filtering index being satisfied the predetermined condition, the message is transmitted to the third device.

13. The method of claim 1, wherein the first device includes a server configured to control the device-to-device communication, and wherein the second device and the third device include a user equipment (UE) configured to perform the device-to-device communication.

14. The method of claim 1, wherein the header further includes an additional extension flag field, and wherein the flag field further includes a bit representing a presence of the additional extension flag field.

15. The method of claim 1, wherein the filtering information is obtained based on the header without decoding the payload.

16. A first device configured to operate in a wireless communication system, the first device comprising:

at least one radio frequency (RF) unit;

at least one processor; and
at least one computer memory operably connected to the at least one processor and configured to, when executed, cause the at least one processor to perform operations comprising:

transmitting configuration information for direct device-to-device communication to a second device;
receiving a message including a header and a payload from the second device, wherein the header includes an extension flag field including a plurality of bits and extension data fields respectively corresponding to data types identified by the extension flag field; and
forwarding the message to a third device based on filtering information obtained from the extension data field being satisfied a predetermined condition.

17. An operation method for a second device in a wireless communication system, the method comprising:

receiving configuration information for direct device-to-device communication from a first device; and
transmitting a message including a header and a payload to the first device,
wherein the header includes an extension flag field including a plurality of bits and extension data fields respectively corresponding to data types identified by the extension flag field, and
wherein whether the message is forwarded to a third device through the first device is determined depending on whether filtering information obtained from the extension data field satisfies a predetermined condition.

18. A second device configured to operate in a wireless communication system, the second device comprising:

at least one radio frequency (RF) unit;
at least one processor; and
at least one computer memory operably connected to the at least one processor and configured to, when executed, cause the at least one processor to perform operations comprising:

receiving configuration information for direct device-to-device communication from a first device; and
transmitting a message including a header and a payload to the first device,
wherein the header includes an extension flag field including a plurality of bits and extension data fields respectively corresponding to data types identified by the extension flag field, and
wherein whether the message is forwarded to a third device through the first device is determined depending on whether filtering information obtained from the extension data field satisfies a predetermined condition.

19. An apparatus configured to operate in a wireless communication system, the apparatus comprising:

at least one processor; and
at least one computer memory operably connected to the at least one processor and configured to, when executed, cause the at least one processor to perform operations comprising:

transmitting configuration information for direct device-to-device communication to a second device;
receiving a message including a header and a payload from the second device, wherein the header includes an extension flag field including a plurality of bits and extension data fields respectively corresponding to data types identified by the extension flag field; and
forwarding the message to a third device based on filtering information obtained from the extension data field being satisfied a predetermined condition.

20. A computer-readable storage medium comprising at least one computer program configured to, when executed, cause at least one processor to perform operations comprising:

transmitting configuration information for direct device-to-device communication to a second device;
receiving a message including a header and a payload from the second device, wherein the header includes an extension flag field including a plurality of bits and extension data fields respectively corresponding to data types identified by the extension flag field; and
forwarding the message to a third device based on filtering information obtained from the extension data field being satisfied a predetermined condition.

EP 4 425 972 A1

# FIG. 1

# FIG. 2

# FIG. 3

# FIG. 4

# FIG. 5

# FIG. 6

```
┌ ─ ─ ─ ─ ─ ─ ─ ─ ─ ─ ─ ─ ┐   ┆   ┌ ─ ─ ─ ─ ─ ─ ─ ─ ─ ─ ─ ─ ┐
│ UE A                     │   ┆   │ UE B                     │
│                          │   ┆   │                          │
│   ┌──────────┐           │   ┆   │           ┌──────────┐   │
│   │   SDAP   │◄──────────┼───┼───┼──────────►│   SDAP   │   │
│   └──────────┘           │   ┆   │           └──────────┘   │
│   ┌──────────┐           │   ┆   │           ┌──────────┐   │
│   │   PDCP   │◄──────────┼───┼───┼──────────►│   PDCP   │   │
│   └──────────┘           │   ┆   │           └──────────┘   │
│   ┌──────────┐           │   ┆   │           ┌──────────┐   │
│   │   RLC    │◄──────────┼───┼───┼──────────►│   RLC    │   │
│   └──────────┘           │   ┆   │           └──────────┘   │
│   ┌──────────┐           │   ┆   │           ┌──────────┐   │
│   │   MAC    │◄──────────┼───┼───┼──────────►│   MAC    │   │
│   └──────────┘           │   ┆   │           └──────────┘   │
│   ┌──────────┐           │   ┆   │           ┌──────────┐   │
│   │   PHY    │◄──────────┼───┼───┼──────────►│   PHY    │   │
│   └──────────┘           │   ┆   │           └──────────┘   │
└ ─ ─ ─ ─ ─ ─ ─ ─ ─ ─ ─ ─ ┘   ┆   └ ─ ─ ─ ─ ─ ─ ─ ─ ─ ─ ─ ─ ┘
```

PU5-U

(a)

```
┌ ─ ─ ─ ─ ─ ─ ─ ─ ─ ─ ─ ─ ┐   ┆   ┌ ─ ─ ─ ─ ─ ─ ─ ─ ─ ─ ─ ─ ┐
│ UE A                     │   ┆   │ UE B                     │
│                          │   ┆   │                          │
│   ┌──────────┐           │   ┆   │           ┌──────────┐   │
│   │   RRC    │◄──────────┼───┼───┼──────────►│   RRC    │   │
│   └──────────┘           │   ┆   │           └──────────┘   │
│   ┌──────────┐           │   ┆   │           ┌──────────┐   │
│   │   PDCP   │◄──────────┼───┼───┼──────────►│   PDCP   │   │
│   └──────────┘           │   ┆   │           └──────────┘   │
│   ┌──────────┐           │   ┆   │           ┌──────────┐   │
│   │   RLC    │◄──────────┼───┼───┼──────────►│   RLC    │   │
│   └──────────┘           │   ┆   │           └──────────┘   │
│   ┌──────────┐           │   ┆   │           ┌──────────┐   │
│   │   MAC    │◄──────────┼───┼───┼──────────►│   MAC    │   │
│   └──────────┘           │   ┆   │           └──────────┘   │
│   ┌──────────┐           │   ┆   │           ┌──────────┐   │
│   │   PHY    │◄──────────┼───┼───┼──────────►│   PHY    │   │
│   └──────────┘           │   ┆   │           └──────────┘   │
└ ─ ─ ─ ─ ─ ─ ─ ─ ─ ─ ─ ─ ┘   ┆   └ ─ ─ ─ ─ ─ ─ ─ ─ ─ ─ ─ ─ ┘
```

PU5-U

(b)

# FIG. 7

BS (e.g. eNB or gNB)

UE 1                    UE 2

# FIG. 8

Frequency

| Unit #($N_F$-1) | Unit #($2N_F$-1) | Unit #($N_F$*$N_T$-1) | Unit #($N_F$-1) |

| Unit #1 | Unit #($N_F$+1) | Unit #($N_F$*$N_T$-$N_F$+1) | Unit #1 |

| Unit #0 | Unit #$N_F$ | Unit #($N_F$*$N_T$-$N_F$) | Unit #0 |

Time

D2D signal transmission
from a UE allocated with unit #0

D2D signal transmission
from a UE allocated with unit #0

# FIG. 9

# FIG. 10

C-V@X (LTE-V2X) in EU

| Applications |
|---|

| Management | Facilities | Security (ETSI TS 102 940, ...) |
|---|---|---|

Facilities:
- Requirements & Profile (ETSI EN 302 637, ...)
- Message Dictionary (ETSI EN 102 894-2)

| BTP (ETSI EN 302 636-5) | UDP/TCP/others |
|---|---|
| GeiNetworking (ETSI EN 302 636-4) | IPv6 |

| ProSe Signaling | NON-IP |
|---|---|
| | PDCP |
| | RLC |
| MAC | |
| PHY | |

C-V@X (LTE-V2X) in US

| Applications |
|---|

| Management | Facilities | Security (IEEE 1609.2) |
|---|---|---|

Facilities:
- Requirements & Profile (SAE J3161, ...)
- Message Dictionary (SAE J2735)

| WSMP (IEEE 1609.3) | UDP/TCP/others |
|---|---|
| | IPv6 |

| ProSe Signaling | NON-IP |
|---|---|
| | PDCP |
| | RLC |
| MAC | |
| PHY | |

# FIG. 11

# FIG. 12

(a)                                 (b)

# FIG. 13

| MQTT Payload | |
|---|---|

| V2N Header | V2N Payload (V2X message) |
|---|---|

| MessageType (1B) | ExtensionFlag (1B) | ExtensionData1 (NB) | ..... | ExtensionData8 (NB) |
|---|---|---|---|---|

| Message Type | data |
|---|---|
| SoftV2X message (BSM) | 1 |
| SoftV2X message (PSM) | 2 |
| Filtering Control Data | 3 |
| reserved | 4 |
| reserved | 5 |
| reserved | 6 |
| reserved | 7 |
| reserved | 8 |

| Extension Flag | bit |
|---|---|
| Direcion | 1 |
| Z-level | 2 |
| LaneID | 3 |
| reserved | 4 |
| reserved | 5 |
| reserved | 6 |
| reserved | 7 |
| ExtraExtensionFlag | 8 |

# FIG. 14

| Direcion Type | Bit |
|---|---|
| North | 1 |
| South | 2 |
| East | 3 |
| West | 4 |
| Distancefromcenter | 5 |
| | 6 |
| | 7 |
| | 8 |

| Direcion Type | Data |
|---|---|
| Heading [MSB: MSB-8] | 0~256 |

# FIG. 15

# FIG. 16

| SoftV2X packet | | |
|---|---|---|
| MessageType (1B) | ExtensionFlag (1B) | ExtensionData (1B) |
| 1 = SoftV2X | 0 0 0 0 0 0 0 1 | 0 0 0 0 1 0 0 1 |

W E S N

# FIG. 17

| LayerType | Value |
|---|---|
| -3 | 1 |
| -2 | 2 |
| -1 | 3 |
| 1 | 4 |
| 2 | 5 |
| 3 | 6 |
| 4 | 7 |
| unknown | 8 |

or    LayerType = Altitude_LSB [8bit]

# FIG. 18

Level 3

$Z^{upper}_{Level_2}$

Level 2

$Z^{lower}_{Level_2}$

$Z^{upper}_{Level_1}$

Level 1

$Z^{lower}_{Level_1}$

$Z^{upper}_{Level_{-1}}$

Level -1

$Z^{lower}_{Level_{-1}}$

Level -2

# FIG. 19

| SoftV2X packet | | |
|---|---|---|
| MessageType (1B) | ExtensionFlag (1B) | ExtensionData (NB) |
| 1 = SoftV2X | 0 0 0 0 0 0 1 0 | 0 0 0 0 1 0 0 0 |

Level 1

# FIG. 20

laneID = 100 ⇐

laneID = 101 ⇐

laneID = 201 ⇒

laneID = 202 ⇒

| DE_LaneID |
|---|
| LaneId ::= INTEGER (0..255)<br>--the value 0 shall be used<br>when the lane ID is<br>--not available or not known<br>-- the value 255 is reserved for<br>future use |

# FIG. 21

| SoftV2X packet | | | |
|---|---|---|---|

| MessageType (1B) | ExtensionFlag (1B) | ExtensionData (1B) |
|---|---|---|
| 1 = SoftV2X | 0 0 0 0 0 1 0 0 | LaneID |

# FIG. 22

# FIG. 23

| SoftV2X packet | | | | |
|---|---|---|---|---|

| MessageType (1B) | softV2X payload | | | |
|---|---|---|---|---|
| 3=FilteringControl | DF_RoadInfo. | ThetaRange | DF_ZlevelBound | DF_LaneIDs |

# FIG. 24

| Name | Date element | Value |
|------|--------------|-------|
| PointA | DF_Location | Pos_A |
| PointB | DF_Location | Pos_B |
| Curvature | DE_Curvature | 0~65536 |

$Pos^A = [x^A, y^A]$  Curvature = max value

A

$Pos^B = [x^B, y^B]$

(a)

$Pos^A = [x^A, y^A]$  Curvature = 350m

$Pos^B = [x^B, y^B]$

(b)

# FIG. 25

Level 2  $Z^{upper}_{Level_2}$  $Z^{lower}_{Level_2}$

$Z^{upper}_{Level_1}$

Level 1  $Z^{lower}_{Level_1}$

pdf

$Z^{lower}_{Level_1}$  $Z^{upper}_{Level_1}$  $Z^{upper}_{Level_2}$

$Z^{center}_{Level_1}$  $Z^{lower}_{Level_2}$  $Z^{center}_{Level_2}$  $Z_{level}$

# FIG. 26

laneID = 100

laneID = 101    a    600

laneID = 201    b    601

laneID = 202    602

(a)

laneID = 100

laneID = 101

laneID = 201    a,b

laneID = 202

(b)

# FIG. 27

```
        ( Start )
            │
            ▼
┌────────────────────────────────────┐
│      Transmtiting configuration information      │──── S2700
│ for device-to-device communication to second device │
└────────────────────────────────────┘
            │
            ▼
┌────────────────────────────────────┐
│   Receiving message including header and payload   │──── S2710
│             from second device             │
└────────────────────────────────────┘
            │
            ▼
┌────────────────────────────────────┐
│ Transmitting message to third device based on filtering │──── S2720
│   information satisfying preconfigured condition   │
└────────────────────────────────────┘
            │
            ▼
         ( End )
```

# FIG. 28

```
        ( Start )
            │
            ▼
┌────────────────────────────────────┐
│       Receiving configuration information       │──── S2800
│ for device-to-device communication from first device │
└────────────────────────────────────┘
            │
            ▼
┌────────────────────────────────────┐
│  Transmtiting message including header and payload  │──── S2810
│               to first device               │
└────────────────────────────────────┘
            │
            ▼
         ( End )
```

# FIG. 29

# FIG. 30

# FIG. 31

Device(100, 200)

| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 32

Vehicle or autonomous driving vehicle (100)

- Communication unit (110)
- Control unit (120)
- Memory unit (130)
- Driving unit (140a)
- Power supply unit (140b)
- Sensor unit (140c)
- Autonomous driving unit (140d)

108    208

Device (100, 200)

- Communication unit (210)
- Control unit (220)
- Memory unit (230)
- Driving unit (140a)
- Power supply unit (140b)
- Sensor unit (140c)
- Autonomous driving unit (140d)

## INTERNATIONAL SEARCH REPORT

| International application No. |
|---|
| **PCT/KR2022/016587** |

**A. CLASSIFICATION OF SUBJECT MATTER**

**H04W 4/12**(2009.01)i; **H04W 4/40**(2018.01)i; **H04W 4/02**(2009.01)i; **H04L 51/212**(2022.01)i

According to International Patent Classification (IPC) or to both national classification and IPC

**B. FIELDS SEARCHED**

Minimum documentation searched (classification system followed by classification symbols)

H04W 4/12(2009.01); G08G 1/16(2006.01); H04L 12/951(2013.01); H04N 19/13(2014.01); H04N 19/174(2014.01); H04W 28/06(2009.01); H04W 4/00(2009.01); H04W 52/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 메시지(message), 헤더(header), 페이로드(payload), 확장 플래그 필드(extension flag field), 확장 데이터 필드(extension data field)

**C. DOCUMENTS CONSIDERED TO BE RELEVANT**

| Category* | Citation of document, with indication, where appropriate, of the relevant passages | Relevant to claim No. |
|---|---|---|
| A | WO 2019-117369 A1 (LG ELECTRONICS INC.) 20 June 2019 (2019-06-20)<br>See paragraphs [0008]-[0012] and [0101]-[0108] and figure 5. | 1-20 |
| A | US 2013-0094418 A1 (LG ELECTRONICS INC.) 18 April 2013 (2013-04-18)<br>See paragraphs [0072]-[0098] and figures 5-7. | 1-20 |
| A | WO 2017-026110 A1 (SHARP KABUSHIKI KAISHA) 16 February 2017 (2017-02-16)<br>See paragraphs [0047]-[0092] and figures 6A-6C and 7-9. | 1-20 |
| A | KR 10-2015-0003289 A (TELEFONAKTIEBOLAGET LM ERICSSON (PUBL)) 08 January 2015 (2015-01-08)<br>See paragraphs [0043]-[0227] and figures 3A-3C. | 1-20 |
| A | WO 2017-011039 A1 (INTEL CORPORATION) 19 January 2017 (2017-01-19)<br>See page 15, line 26 - page 18, line 5 and figures 7A-7B. | 1-20 |

☐ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **27 January 2023** | **31 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/016587**

| Patent document cited in search report | | | Publication date (day/month/year) | Patent family member(s) | | | Publication date (day/month/year) |
|---|---|---|---|---|---|---|---|
| WO | 2019-117369 | A1 | 20 June 2019 | EP | 3726861 | A1 | 21 October 2020 |
| | | | | EP | 3726861 | A4 | 26 May 2021 |
| | | | | US | 11317259 | B2 | 26 April 2022 |
| | | | | US | 2020-0367030 | A1 | 19 November 2020 |
| US | 2013-0094418 | A1 | 18 April 2013 | US | 8891424 | B2 | 18 November 2014 |
| WO | 2017-026110 | A1 | 16 February 2017 | CA | 2994215 | A1 | 16 February 2017 |
| | | | | US | 10735563 | B2 | 04 August 2020 |
| | | | | US | 2018-0234525 | A1 | 16 August 2018 |
| | | | | US | 2020-0259935 | A1 | 13 August 2020 |
| KR | 10-2015-0003289 | A | 08 January 2015 | CN | 104350751 | A | 11 February 2015 |
| | | | | CN | 104350751 | B | 12 December 2017 |
| | | | | CN | 107743236 | A | 27 February 2018 |
| | | | | CN | 107743236 | B | 09 October 2020 |
| | | | | EP | 2837176 | A1 | 18 February 2015 |
| | | | | EP | 2837176 | B1 | 23 March 2016 |
| | | | | EP | 3051824 | A1 | 03 August 2016 |
| | | | | EP | 3051824 | B1 | 05 February 2020 |
| | | | | EP | 3684058 | A1 | 22 July 2020 |
| | | | | EP | 3684058 | B1 | 11 August 2021 |
| | | | | JP | 2015-516755 | A | 11 June 2015 |
| | | | | JP | 5918903 | B2 | 18 May 2016 |
| | | | | KR | 10-1619688 | B1 | 10 May 2016 |
| | | | | TW | 201404159 | A | 16 January 2014 |
| | | | | TW | I549491 | B | 11 September 2016 |
| | | | | US | 10306231 | B2 | 28 May 2019 |
| | | | | US | 10694185 | B2 | 23 June 2020 |
| | | | | US | 10951899 | B2 | 16 March 2021 |
| | | | | US | 2014-0211841 | A1 | 31 July 2014 |
| | | | | US | 2017-0094276 | A1 | 30 March 2017 |
| | | | | US | 2018-0241997 | A1 | 23 August 2018 |
| | | | | US | 2019-0238851 | A1 | 01 August 2019 |
| | | | | US | 2020-0322608 | A1 | 08 October 2020 |
| | | | | US | 2021-0203938 | A1 | 01 July 2021 |
| | | | | US | 2022-0217352 | A1 | 07 July 2022 |
| | | | | US | 9554129 | B2 | 24 January 2017 |
| | | | | US | 9973760 | B2 | 15 May 2018 |
| | | | | WO | 2013-154482 | A1 | 17 October 2013 |
| WO | 2017-011039 | A1 | 19 January 2017 | CN | 107852763 | A | 27 March 2018 |
| | | | | CN | 107852763 | B | 24 December 2021 |
| | | | | EP | 3323270 | A1 | 23 May 2018 |
| | | | | HK | 1251843 | A1 | 12 April 2019 |
| | | | | JP | 2018-527771 | A | 20 September 2018 |
| | | | | JP | 6805177 | B2 | 23 December 2020 |
| | | | | US | 2018-0213376 | A1 | 26 July 2018 |

Form PCT/ISA/210 (patent family annex) (July 2022)